(19) **Europäisches Patentamt**
**European Patent Office**
**Office européen des brevets**

(11) **EP 3 176 614 A1**

(12) **EUROPEAN PATENT APPLICATION**
published in accordance with Art. 153(4) EPC

(43) Date of publication:
07.06.2017 Bulletin 2017/23

(21) Application number: 15827483.7

(22) Date of filing: 28.07.2015

(51) Int Cl.:
*G02B 5/22* (2006.01)    *B32B 23/08* (2006.01)
*B32B 23/22* (2006.01)    *B32B 27/18* (2006.01)
*B32B 27/30* (2006.01)    *C09D 5/32* (2006.01)
*C09D 7/12* (2006.01)    *C09D 101/00* (2006.01)
*C09D 129/04* (2006.01)    *G02B 5/26* (2006.01)
*G02B 5/28* (2006.01)

(86) International application number:
**PCT/JP2015/071303**

(87) International publication number:
**WO 2016/017604 (04.02.2016 Gazette 2016/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 30.07.2014 JP 2014154393

(71) Applicant: **Konica Minolta, Inc.**
**Tokyo 100-7015 (JP)**

(72) Inventor: **KOYAMA, Hirokazu**
**Tokyo 100-7015 (JP)**

(74) Representative: **Henkel, Breuer & Partner**
**Patentanwälte**
**Maximiliansplatz 21**
**80333 München (DE)**

(54) **OPTICAL FILM AND METHOD FOR MANUFACTURING OPTICAL FILM**

(57) The purpose of the present invention is to provide an optical film having thermochromic properties such that the near-infrared screening factor can be adjusted in response to the temperature environment, and having low haze, and exceptional cohesion and resistance to cracking even with service for an extended period; and a method for manufacturing the same. This optical film has, on a transparent substrate, an optically functional layer containing at least a vanadium dioxide-containing powder and a binder resin, wherein the optical film is characterized in that the number-average particle diameter of all particles, including primary particles and secondary particles, of the vanadium dioxide-containing powder in the optically functional layer is less than 200 nm.

*FIG. 1*

EP 3 176 614 A1

**Description**

Technical Field

The present invention relates to a near-infrared light shielding optical film, and a method for manufacturing the same. More particularly, the invention relates to an optical film which has thermochromic properties, has a low haze value, and exhibits excellent cracking resistance and adhesiveness, and a method for manufacturing the optical film.

Background Art

In recent years, heat insulating glasses that block the heat felt by the skin due to the influence of external light (solar light) penetrating through windows in cars and buildings, and have high heat insulating properties or heat shielding properties, have been distributed in the market. Recently, along with the popularization of electric vehicles and the like, development of near-infrared light (heat rays) shielding films is in active progress, from the viewpoint of increasing the efficiency of air-conditioning inside the car.

Near-infrared light shielding films can reduce the burden on the air-conditioning facilities such as car air-conditioners when applied to windowpanes of vehicles or buildings, and therefore, the near-infrared light shielding films are effective means as measures for energy saving.

Regarding such near-infrared shielding films, optical films containing an electrical conductor such as ITO (tin-doped indium oxide) as an infrared absorbing substance have been disclosed. Furthermore, JP 2010-222233 A discloses a near-infrared light shielding film that includes a functional plastic film having an infrared reflective layer and an infrared absorbing layer.

On the other hand, there has been suggested a near-infrared light shielding film having a reflective layer laminate in which a large number of low-refractive index layers and high-refractive index layers are alternately laminated, the near-infrared light shielding film being capable of selectively reflecting near-infrared light by adjusting the layer thicknesses of the various refractive index layers (see, for example, Patent Literature 1).

Near-infrared light shielding films having such a configuration are preferably utilized in low-latitude regions near the equator, where the illuminance of solar light is high, due to the high near-infrared light shielding effect of the films. However, during the winter season in medium-latitude regions and high-latitude regions, in contrast, even in a case in which it is wished to take in the sunlight into a car or into a room as much as possible, since the near-infrared light shielding films shield light in the same way, there is a problem that it does not become warm inside a car or a room in winter.

In view of the problems described above, an investigation has been conducted on a method of applying a thermochromic material, which can control optical properties for shielding or transmission of near-infrared light by means of temperature, to a near-infrared light shielding film. A representative material thereof is vanadium dioxide (hereinafter, described as $VO_2$). It is known that $VO_2$ causes phase transition in a temperature region near 60°C and exhibits thermochromic properties. That is, by using an optical film that utilizes the characteristics of this $VO_2$, characteristics of shielding near-infrared light that causes heating when temperature rises, and transmitting near-infrared light in a low temperature region, can be manifested. Thereby, when it is hot in summer, near-infrared light is shielded, and temperature increase in the room can be suppressed. When it is cold in winter, light energy from the outside can be taken into the room.

As a specific example of $VO_2$ having such characteristics, a method of obtaining nano-sized fine particles of vanadium dioxide ($VO_2$) from vanadium and hydrazine or hydrate thereof by hydrothermal synthesis has been disclosed (see, for example, Patent Literature 2). Also disclosed is a method by which a thermochromic film can be provided by dispersing $VO_2$ nanoparticles produced by the hydrothermal synthesis method in a transparent resin, and forming a $VO_2$-dispersed resin layer on a resin substrate to form a laminate (see, for example, Patent Literature 3).

However, in regard to $VO_2$-containing fine particles, it has been found that in a case in which particles are synthesized and then dried by filtration, or in a case in which an optical functional film exhibiting thermochromic properties is formed using a solvent-based coating liquid prepared together with a binder that is insoluble in a water-based solvent, primary particles of $VO_2$-containing fine particles aggregate, and thereby aggregated secondary particles are likely to be produced. Particularly, secondary particles of $VO_2$-containing fine particles produced by going through a drying process once, are not likely to be fully disaggregated to form primary particles, even if the secondary particles are subjected to a general dispersion treatment, and many of them exist as secondary particles in an aggregated state in the optical functional film thus formed. It has been found that if such secondary particles exist in an optical functional film, when the optical functional film is used for an extended period of time in an environment in which temperature or humidity vary significantly, cracking or film peeling occurs at these sites of aggregated secondary particle clusters as starting points. Furthermore, if there are a large amount of such aggregated secondary particles, the resulting optical film has a problem of increased haze. Therefore, there is an urge demand for the development of an optical film having thermochromic properties and having excellent durability (cracking resistance or adhesiveness) and excellent haze resistance.

Citation List

Patent Literature

Patent Literature 1: WO 2013/065679 A
Patent Literature 2: JP 2011-178825 A
Patent Literature 3: JP 2013-184091 A

Summary of Invention

Technical Problem

The present invention was achieved in view of the problems described above, and an object of the invention is to provide an optical film which has thermochromic properties capable of regulating the near-infrared shield factor or the near-infrared transmittance in accordance with the temperature environment, has a low haze value, and exhibits excellent cracking resistance and adhesiveness even if put to use for an extended period of time; and a method for manufacturing the optical film.

Solution to Problem

The inventors of the present invention conducted a thorough investigation in view of the objects described above, and as a result, the inventors found that by using an optical film which has, on a transparent substrate, an optically functional layer containing at least a binder resin and vanadium dioxide-containing fine particles (hereinafter, also referred to as $VO_2$-containing fine particles), in which the number average particle size of all the particles including primary particles and secondary particles is less than 200 nm, an optical film which has thermochromic properties capable of regulating the near-infrared shield factor in accordance with the temperature environment, has a low haze value, and exhibits excellent cracking resistance and adhesiveness even if put to use for an extended period of time, can be obtained. Thus, the inventors completed the present invention.
That is, the object of the present invention described above is addressed by the following means.

1. An optical film including, on a transparent substrate, an optically functional layer containing at least vanadium dioxide-containing fine particles and a binder resin,
wherein the number average particle size of all the particles including primary particles and secondary particles of the vanadium dioxide-containing fine particles in the optically functional layer is less than 200 nm.
2. The optical film according to Item. 1, wherein the vanadium dioxide-containing fine particles are vanadium dioxide-containing fine particles produced by an aqueous synthesis method, and the binder resin is a water-based binder resin.
3. The optical film according to Item. 2, wherein the water-based binder resin is a polymer containing a repeating unit having a hydroxyl group at a proportion of 50 mol% or more.
4. The optical film according to Item. 2 or 3, wherein the water-based binder resin is a polyvinyl alcohol-based resin or a cellulose-based resin.
5. The optical film according to any one of Items. 2 to 4, wherein the surface of the vanadium dioxide-containing fine particles produced by an aqueous synthesis method is coated, before being mixed with the water-based binder resin, with a resin that is the same as the water-based binder resin, or a resin of the same kind as the water-based binder resin.
6. The optical film according to any one of Items. 1 to 5, further including, in addition to the optically functional layer, a near-infrared light shielding layer having a function of shielding at least a portion of light having a wavelength in the range of 700 to 1,000 nm.
7. The optical film according to Item. 6, wherein the near-infrared light shielding layer is a reflective layer laminate capable of selectively reflecting light having a particular wavelength, the near-infrared light shielding layer being obtained by alternately laminating a high refractive index reflective layer containing a first water-soluble binder resin and first metal oxide particles, and a low refractive index reflective layer containing a second water-soluble binder resin and second metal oxide particles.
8. The optical film according to Item. 7, wherein the water-based binder resin constituting the optically functional layer, and the first water-soluble binder resin or the second water-soluble binder resin constituting the reflective layer laminate are binder resins of the same kind.

9. The optical film according to any one of Items. 1 to 8, wherein the ratio of the particle number of primary particles of the vanadium dioxide-containing fine particles in the optically functional layer is 30% by number or more of the total number of particles.

10. A method for manufacturing an optical film, the method including forming an optically functional layer containing at least vanadium dioxide-containing fine particles and a binder resin on a transparent substrate, wherein the number average particle size of all the particles including primary particles and secondary particles of the vanadium dioxide-containing fine particles is regulated to be less than 200 nm.

11. The method for manufacturing an optical film according to Item. 10, wherein vanadium dioxide-containing fine particles produced by an aqueous synthesis method are used as the vanadium dioxide-containing fine particles, and the binder resin is a water-based binder resin.

12. The method for manufacturing an optical film according to Item. 11, wherein the vanadium dioxide-containing fine particles are prepared as a water-based dispersion liquid containing vanadium dioxide-containing fine particles by the aqueous synthesis method, the water-based dispersion liquid is produced into a water-based coating liquid for forming an optically functional layer, without being in a dried state, by mixing the water-based dispersion liquid with a water-based binder resin solution obtained by dissolving at least the water-based binder resin in a water-based solvent, the coating liquid for forming an optically functional layer is applied on the transparent substrate by a wet coating method and dried, and thus an optical film is produced.

13. The method for manufacturing an optical film according to Item. 12, wherein in regard to the preparation of the water-based coating liquid for forming an optically functional layer, the water-based dispersion liquid containing vanadium dioxide-containing fine particles is subjected to an ultrafiltration treatment before being mixed with the water-based binder resin solution.

14. The method for manufacturing an optical film according to any one of Items. 11 to 13, wherein the surface of the vanadium dioxide-containing fine particles is coated with a resin that is the same as the water-based binder resin, or a resin of the same kind as the water-based binder resin.

15. The method for manufacturing an optical film according to any one of Items. 10 to 14, wherein a near-infrared light shielding layer having a function of shielding at least a portion of light having a wavelength in the range of 700 to 1,000 nm is formed in addition to the optically functional layer.

16. The method for manufacturing an optical film according to Item. 15, wherein the near-infrared light shielding layer forms a reflective layer laminate capable of selectively reflecting light having a particular wavelength, the near-infrared light shielding layer being obtained by alternately laminating a high refractive index reflective layer containing a first water-soluble binder resin and first metal oxide particles, and a low refractive index reflective layer containing a second water-soluble binder resin and second metal oxide particles.

17. The method for manufacturing an optical film according to Item. 16, wherein the water-based binder resin included in the optically functional layer, and the first water-soluble binder resin or the second water-soluble binder resin used for forming the near-infrared shielding layer include binder resins of the same kind, and an optical film is produced by applying the optically functional layer and the near-infrared light shielding layer by simultaneous multilayer application on the transparent substrate.

Advantageous Effects of Invention

Based on the above-described means of the present invention, an optical film which has thermochromic properties capable of regulating the near-infrared shield factor in accordance with the temperature environment, has a low haze value, and exhibits excellent cracking resistance and adhesiveness even if put to use for an extended period of time, and a method for manufacturing the optical film can be provided.

The manifestation mechanism and operating mechanism by which the purpose and effects of the present invention described above could be achieved, are not clearly understood; however, the mechanisms are speculated as follows.

Conventionally, regarding the method for producing $VO_2$-containing fine particles, there are available a method of pulverizing $VO_2$ crystal lumps that have been synthesized by a calcination treatment; and a method of obtaining $VO_2$-containing fine particles as a $VO_2$ dispersion liquid by an aqueous synthesis method. In the method of pulverizing $VO_2$ crystal lumps, production of fine particles having a number average particle size of 100 nm or less is difficult, and it is the current situation that the primary particle size of $VO_2$ particles is large. Furthermore, in the pulverization method, the particles are in the form of secondary particles in which several particles have strongly agglomerated under the energy applied at the time of pulverization. Usually, such secondary particles are not likely to be completely converted to primary particles even after a dispersion treatment, and it is the current situation that among optically functional layers, only a film in which the number average particle size is significantly larger than 200 nm can be obtained.

Regarding the aqueous synthesis method for producing $VO_2$-containing fine particles in an aqueous system, for example, a method of synthesizing the fine particles using a hydrothermal method may be used. According to hydrothermal synthesis, fine particles having a number average particle size of 100 nm or less as the primary particle size can be synthesized.

However, the conventional method is a method in which, when an optically functional layer is formed by mixing VO$_2$-containing fine particles synthesized by an aqueous synthesis method, with a binder resin, the VO$_2$-containing fine particles thus synthesized are first dried and then mixed with a solvent-based binder resin and a solvent to produce a coating liquid, an optically functional layer is formed using the coating liquid. It has been found that in this method, VO$_2$-containing fine particles can realize only a particle-dispersed state that has caused secondary aggregation with a number average particle size of more than 200 nm in the layer. In this regard, it could be understood that when a process of drying VO$_2$-containing fine particles is carried out, the surface of the VO$_2$-containing fine particles that have been produced by aqueous synthesis becomes hydrophilic with high surface energy, and thus strongly aggregated secondary particles are formed. Regarding the secondary particles thus formed, it was difficult to redisperse the secondary particles to a level of a number average particle size of 200 nm or less even if the secondary particles were subjected to a conventional dispersion treatment.

It was found that in an optically functional layer in which the number average particle size of such VO$_2$-containing fine particles is more than 200 nm, when the optically functional layer is exposed for a long time period to an environment in which temperature or humidity varies significantly, cracking or film peeling occurs at the secondary aggregated particle sections as starting points.

In this regard, since the secondary aggregated particle region and the binder resin have different coefficients of thermal expansion or different coefficients of hygroscopic expansion, differences occur in the state of expansion and contraction of layers with the changes in environment, and the binder resin in the secondary aggregated particle sections is damaged. Furthermore, it is also contemplated that moisture or low molecular weight components in the layer adsorbing to the interstices of the secondary particles and accelerating deterioration of the binder resin in the secondary aggregated particle sections, also affect the problems described above.

The inventors found that when the number average particle size of all the particles including primary particles and secondary particles of the VO$_2$-containing fine particles in an optically functional layer is set to be less than 200 nm, even in a case in which the optically functional layer has been used for an extended period of time in a use environment for an optical film where the temperature and humidity conditions vary significantly, cracking or film peeling does not occur. Thus, the inventors completed the present invention.

Regarding a specific reason that the above-described object could be achieved, it is speculated that when the number average particle size of all particles including primary particles and secondary particles of VO$_2$-containing fine particles is adjusted to be less than 200 nm, differences in the expansion and contraction characteristics between the VO$_2$-containing fine particle part and the binder resin occurring under changes in the environment in which the optical film is used, can be suppressed to a level that is free from degeneration of the film, and since there are fewer interstices in the secondary particles, incorporation of moisture or low molecular weight components into the secondary particles is also reduced, so that there is an effect that deterioration of the binder resin component in the vicinity of the secondary aggregated particle sections does not proceed in particular.

Furthermore, it was found that VO$_2$-containing fine particles produced by an aqueous synthesis method have a strong interaction with a water-based binder resin. When such a configuration is adopted for an optically functional layer, the VO$_2$-containing fine particles and the binder resin bind strongly to each other, and a condition in which it is more difficult for cracking or film peeling to occur is attained. Furthermore, it is contemplated that since binder resin molecules penetrate in between the secondary particles, an environment in which it is more difficult for incorporation of moisture or low molecular weight components into the secondary particles to occur is attained, and as a result, it is more effectively becoming difficult for deterioration of the binder resin to occur.

In addition, since binder resin molecules can easily penetrate in between the secondary aggregated particles, it has been found that it is also effective for redispersibility of the secondary aggregated particles. Thus, an optical film which has thermochromic properties capable of regulating the near-infrared shield factor in accordance with the temperature environment, has a low haze value, and exhibits excellent cracking resistance and adhesiveness even if put to use for an extended period of time, can be realized.

Brief Description of Drawings

Fig. 1 is a schematic cross-sectional view diagram illustrating an example of the fundamental configuration of the optical film according to an embodiment of the present invention.
Fig. 2A is a schematic cross-sectional view diagram illustrating an example of the layer arrangement of an optical film having a near-infrared light shielding layer.
Fig. 2B is a schematic cross-sectional view diagram illustrating another example of the layer arrangement of an optical film having a near-infrared light shielding layer.

Fig. 2C is a schematic cross-sectional view diagram illustrating another example of the layer arrangement of an optical film having a near-infrared light shielding layer.

Fig. 3 is a schematic cross-sectional view diagram illustrating an example of the configuration of an optical film having a near-infrared light shielding layer.

Fig. 4 is a schematic cross-sectional view diagram illustrating another example of the configuration of an optical film having a near-infrared light shielding layer.

Fig. 5 is a schematic cross-sectional view diagram illustrating another example of the configuration of an optical film having a near-infrared light shielding layer.

Fig. 6 is a schematic cross-sectional view diagram illustrating an example of the configuration of an optical film having a near-infrared light shielding layer on either surface of a transparent substrate.

Fig. 7 is a schematic cross-sectional view diagram illustrating another example of the configuration of an optical film according to the present embodiment having a near-infrared light shielding layer formed on a polymer layer laminate that also functions as a transparent substrate.

Description of Embodiments

The optical film of the invention has, on a transparent substrate, an optically functional layer containing at least vanadium dioxide-containing fine particles and a binder resin, in which the number average particle size of all particles including primary particles and secondary particles of the vanadium dioxide-containing fine particles in the optically functional layer is less than 200 nm. This feature is a technical feature common to the inventions according to claims 1 to 17.

According to an embodiment of the present invention, from the viewpoint of manifesting the effects intended by the invention more effectively, it is preferable that the vanadium dioxide-containing fine particles are vanadium dioxide-containing fine particles produced by an aqueous synthesis method, and the binder resin is a water-based binder resin, from the viewpoint that cracking resistance and adhesiveness can be further enhanced.

Furthermore, when the water-based binder resin is a polymer containing a repeating unit having a hydroxyl group at a proportion of 50 mol% or more, the water-based binder resin has high affinity to the vanadium dioxide-containing fine particles, and during a drying process upon film-forming of the optically functional layer, aggregation caused by the interparticle distance between the vanadium dioxide-containing fine particles being shortened can be effectively prevented. Thus, it is one of the methods capable of adjusting the number average particle size of all particles including primary particles and secondary particles of the vanadium dioxide-containing fine particles to be less than 200 nm.

Furthermore, it is a preferred embodiment in which the water-based binder resin is a polyvinyl alcohol-based resin or a cellulose-based resin, from the viewpoint that superior cracking resistance and adhesiveness can be obtained, in addition to the effects described above.

Furthermore, it is preferable that the surface of the vanadium dioxide-containing fine particles produced by an aqueous synthesis method is coated, before being mixed with the water-based binder resin, with a resin that is the same as the water-based binder resin or a resin of the same kind, from the viewpoint that when the vanadium dioxide-containing fine particles are mixed with a solution of the water-based binder resin, the occurrence of particle aggregates can be prevented, and the number average particle size can be adjusted to be less than 200 nm.

When the optical film has a near-infrared light shielding layer having a function of shielding at least a portion of light having a wavelength in the range of 700 to 1,000 nm in addition to the optically functional layer, and when the near-infrared light shielding layer is produced as a reflective layer laminate that selectively reflects light having a particular wavelength, which is obtained by alternately laminating a high refractive index reflective layer containing a first water-soluble binder resin and first metal oxide particles, and a low refractive index reflective layer containing a second water-soluble binder resin and second metal oxide particles, a light ray reflecting effect can be imparted to the reflective layer laminate in addition to the near-infrared thermal barrier effect provided by the vanadium dioxide-containing fine particles, and a superior near-infrared shielding effect can be obtained.

Furthermore, it is preferable that the water-based binder resin that constitutes the optically functional layer and the first water-soluble binder resin or the second water-soluble binder resin that constitutes the reflective layer laminate are binder resins of the same kind, from the viewpoint of enhancing the adhesiveness between the optically functional layer and the reflective layer laminate, which is a near-infrared light shielding layer, on the transparent substrate can be enhanced.

Also, it is preferable that the ratio of the particle number of primary particles of the vanadium dioxide-containing fine particles in the optically functional layer is 30% by number or more of the total number of particles, from the viewpoint of obtaining superior cracking resistance and adhesiveness.

Furthermore, the method for manufacturing an optical film of the present invention is a method for manufacturing an optical film by forming an optically functional layer containing at least vanadium dioxide-containing fine particles and a binder resin on a transparent substrate, in which the optically functional layer is formed such that the number average particle size of all the particles including primary particles and secondary particles of the vanadium dioxide-containing fine particles to be less than 200 nm.

Furthermore, when the optical film is produced using vanadium dioxide-containing fine particles produced by an aqueous synthesis method as the vanadium dioxide-containing fine particles, and using a water-based binder resin as the binder resin, and when a water-based coating liquid for forming an optically functional layer is prepared by preparing the vanadium dioxide-containing fine particles as a water-based dispersion liquid including vanadium dioxide-containing fine particles by means of the above-mentioned aqueous synthesis method, and mixing the water-based dispersion liquid, without being subjected to a dried state, with at least a water-based binder resin solution obtained by dissolving the water-based binder resin in a water-based solvent, and an optical film is produced by applying the coating liquid for forming an optically functional layer on the above-mentioned transparent substrate by a wet coating method and drying the coating liquid, the condition of adjusting the number average particle size of all the particles including primary particles and secondary particles of the vanadium dioxide-containing fine particles defined by the present invention to be less than 200 nm, without generating aggregates of the vanadium dioxide-containing fine particles, can be achieved. This is preferable from the viewpoint that an optical film having excellent cracking resistance and adhesiveness can be obtained.

In regard to the production of the water-based coating liquid for forming an optically functional layer, it is preferable that the water-based dispersion liquid including the vanadium dioxide-containing fine particles is subjected to an ultrafiltration treatment before the water-based dispersion liquid is mixed with the water-based binder resin solution, from the viewpoint that incorporation of foreign materials or incorporation of coarse secondary particle clusters can be prevented, and an optical film having high film uniformity and having excellent cracking resistance and adhesiveness can be obtained.

It is also preferable that the water-based binder resin that is included in the optically functional layer, and the first water-soluble binder resin or the second water-soluble binder resin that is used to form the near-infrared shielding layer are constructed from binder resins of the same kind, and an optical film is produced on a transparent substrate by applying the optically functional layer and the near-infrared shielding layer by simultaneous multilayer application, from the viewpoint that an optical film having enhanced interface uniformity between the optically functional layer and the near-infrared shielding layer and having a decreased haze value can be obtained.

Hereinafter, the present invention and constituent elements thereof, and embodiments for carrying out the present invention will be described in detail. Meanwhile, in the following description, "to" between numerical values is used to mean to include the numerical values described before and after "to" as a lower limit and an upper limit.

<<Overview of layer configuration of optical film>>

The optical film of the present invention is characterized by having, on a transparent substrate, an optically functional film containing at least vanadium dioxide-containing fine particles and a binder resin, the vanadium dioxide-containing fine particles having a number average particle size of all the particles including primary particles and secondary particles of less than 200 nm.

A representative configuration example of the optical film of the present invention will be explained with reference to the drawings.

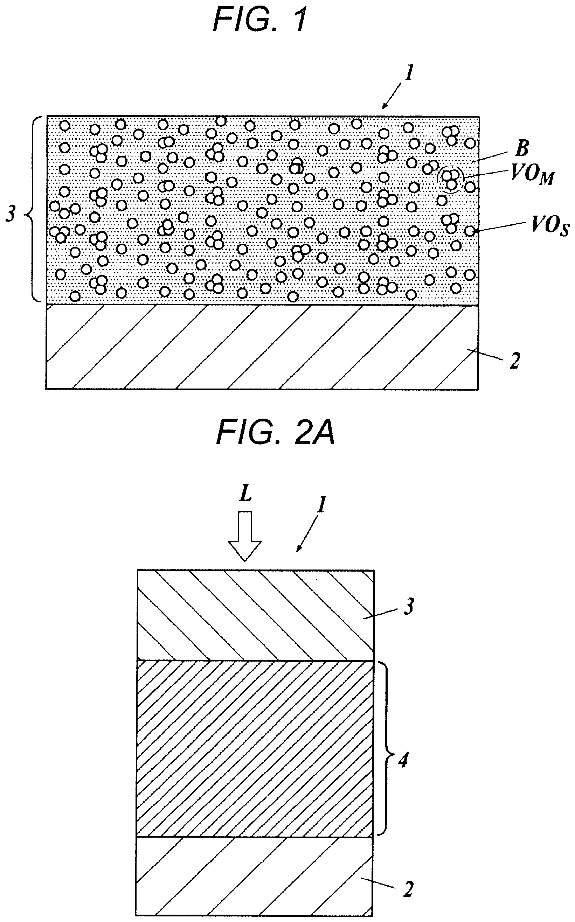

Fig. 1 is a schematic cross-sectional view diagram illustrating an example of the fundamental configuration of an optical film having an optically functional layer containing vanadium dioxide-containing fine particles and a binder resin.

The optical film 1 illustrated in Fig. 1 has a configuration in which an optically functional layer 3 is laminated on a transparent substrate 2. This optically functional layer 3 exists in a state in which vanadium dioxide-containing fine particles are dispersed in the binder resin B. These vanadium dioxide-containing fine particles include primary particles of vanadium dioxide $VO_S$ in which vanadium dioxide-containing fine particles exist independently, and secondary particles of vanadium dioxide $VO_M$ that constitute agglomerates (also called aggregates) of two or more vanadium dioxide-containing fine particles. In the present invention, agglomerates of two or more vanadium dioxide-containing fine particles are collectively referred to as secondary particles. The agglomerates may also be referred to as secondary particle aggregates or secondary aggregated particles.

The present invention is characterized in that the number average particle size of all the particles including primary particles $VO_S$ and secondary particles $VO_M$ of vanadium dioxide-containing fine particles in the optically functional layer 3 is less than 200 nm.

According to the present invention, the average particle size of the vanadium dioxide-containing fine particles in the optically functional layer can be determined by the following method.

First, a lateral surface of the optically functional layer 3 that constitutes the optical film 1 is trimmed using a microtome, and thereby the cross-section shown in Fig. 1 is exposed. Subsequently, the exposed cross-section is photographed at a magnification ratio of 10,000 times to 100,000 times using a transmission electron microscope (TEM).

For the primary particles of vanadium dioxide $VO_S$ and the secondary particles of vanadium dioxide $VO_M$, which constitute all the vanadium dioxide-containing fine particles existing in a certain region of a photographed cross-section, their particle sizes are measured. At this time, the number of the vanadium dioxide-containing fine particles measured is preferably in the range of 50 to 100 particles. As shown in Fig. 1, the photographed particles include primary particles $VO_S$, which are single particles, and secondary particles $VO_M$, which are aggregates of two or more particles.

In regard to the measurement of the respective particle sizes of the particles, the particle size of the primary particles of vanadium dioxide $VO_S$ is obtained by measuring the respective diameters of particles that are in a state of being independently separated. If the particle is not spherical in shape, the projected area of a particle is calculated as the area of an equivalent circle, and the diameter of the circle is regarded as the particle size. On the other hand, for the secondary particles of vanadium dioxide $VO_M$ in which two or more particles exist in an aggregated state, the projected area of an aggregate as a whole is determined, subsequently the projected area is calculated as the area of an equivalent circle, and the diameter of the circle is regarded as the particle size.

For the diameters of all the particles of primary particles and secondary particles determined as described above, the number average diameter is determined. Since the particle size distribution is non-uniform in a cross-section that has been cut out, such measurement is performed at 10 sites in different cross-sectional regions, 500 to 1,000 particles are measured as the total number of particles, and the number average diameter of all the particles is determined. This is referred to as the "number average particle size (nm) of primary particles and secondary particles of the vanadium dioxide-containing fine particles" as used in the present invention.

The details about the vanadium dioxide-containing fine particles according to the present invention will be described below; however, the particle size of the primary particles is in the range of 10 to 100 nm. Therefore, regarding the particle size of the secondary particles, the particle size may vary depending on the number of particles that have aggregated; however, the particle size is approximately in the range of 50 to 500 nm.

In regard to the optical film of the present invention, it is preferable that the optical film has a near-infrared light shielding layer having a function of shielding at least a portion of light having a wavelength in the range of 700 to 1,000 nm, in addition to the optically functional layer containing vanadium dioxide-containing fine particles and a binder resin according to the present invention. It is more preferable that the near-infrared light shielding layer is configured as a reflective layer laminate that selectively reflects light having a particular wavelength, in which a high refractive index reflective layer containing a first water-soluble binder resin and first metal oxide particles, and a low refractive index reflective layer containing a second water-soluble binder resin and second metal oxide particles are alternately laminated.

Fig. 2A to Fig. 2C are schematic cross-sectional view diagrams illustrating representative layer arrangements of an optical film having a near-infrared light shielding layer together with the optically functional layer according to the present invention on a transparent substrate.

The optical film 1 illustrated in Fig. 2A is configured such that, from the light ray incident side L, an optically functional layer 3, a near-infrared light shielding layer 4, and a transparent substrate 2 are disposed in this order.

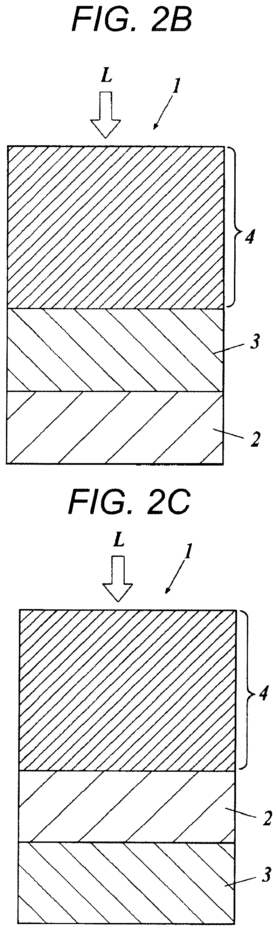

The optical film 1 illustrated in Fig. 2B is an example in which the optically functional layer 3 relate to the present invention is disposed between a transparent substrate 2 and a near-infrared light shielding layer 4, and Fig. 2C is an example in which a near-infrared light shielding layer 4 is disposed on the light ray incident side L of a transparent substrate 2, and the optically functional layer 3 according to the present invention is disposed on the back surface side of the transparent substrate 2.

Such a layer configuration according to the present invention is not particularly limited as long as the layer configuration includes at least a transparent substrate and an optically functional layer 3, and the layer configuration can be selected according to the respective purposes.

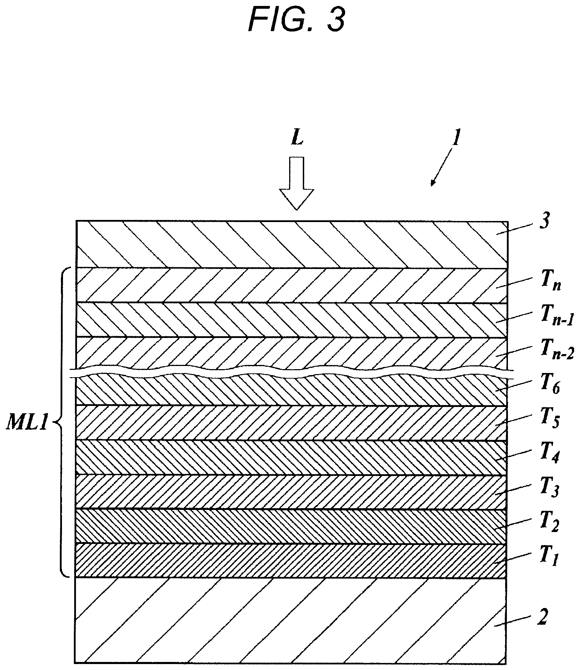

Fig. 3 to Fig. 7 are cross-sectional view diagrams further illustrating the configuration of the near-infrared light shielding layer 4 in detail in connection with the optical film 1 whose schematic layer configurations are illustrated in Fig. 2A to Fig. 2C.

In regard to the near-infrared light shielding layer according to the present invention, a reflective layer laminate capable of selectively reflecting light having a particular wavelength, in which a high refractive index reflective layer containing a first water-soluble binder resin and first metal oxide particles, and a low refractive index reflective layer containing a second water-soluble binder resin and second metal oxide particles are alternately laminated, is a preferred embodiment.

Fig. 3 is a configuration diagram illustrating in detail the configuration of the near-infrared light shielding layer 4 in the optical film 1 illustrated in Fig. 2A.

In Fig. 3, the optical film 1 of the present invention is configured to include, on a transparent substrate 2, a reflective layer laminate ML1 as the near-infrared light shielding layer 4, in which an infrared reflective layer having a high refractive index and containing a first water-soluble binder resin and first metal oxide particles, and an infrared reflective layer having a low refractive index and containing a second water-soluble binder resin and second metal oxide particles are alternately laminated, with an optically functional layer 3 being provided thereon.

The reflective layer laminate ML1 is configured to have n layers of infrared reflective layers $T_1$ to $T_n$ from the

transparent substrate 2 side, and for example, a configuration in which $T_1$, $T_3$, $T_5$, (omitted), $T_{n-2}$, and $T_n$ are constructed from a low refractive index layer having a refractive index in the range of 1.10 to 1.60, and $T_2$, $T_4$, $T_6$, (omitted), and $T_{n-1}$ are constructed from a high refractive index layer having a refractive index in the range of 1.80 to 2.50, may be mentioned as an example. The refractive index as used in the present invention is a value measured in an environment at 25°C.

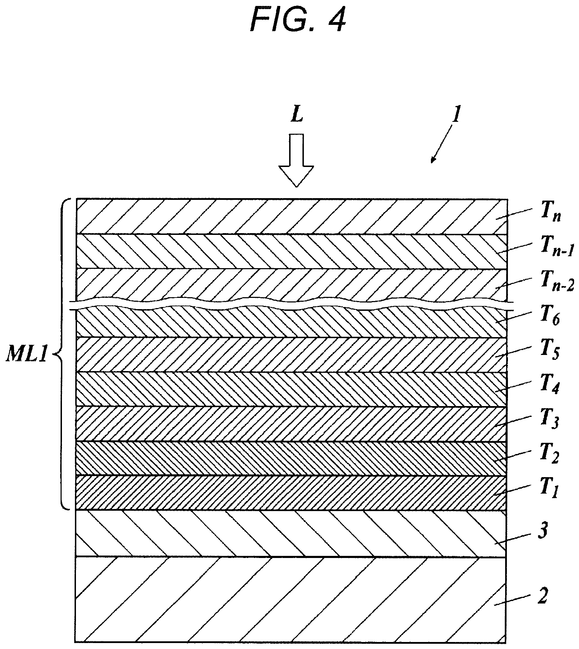

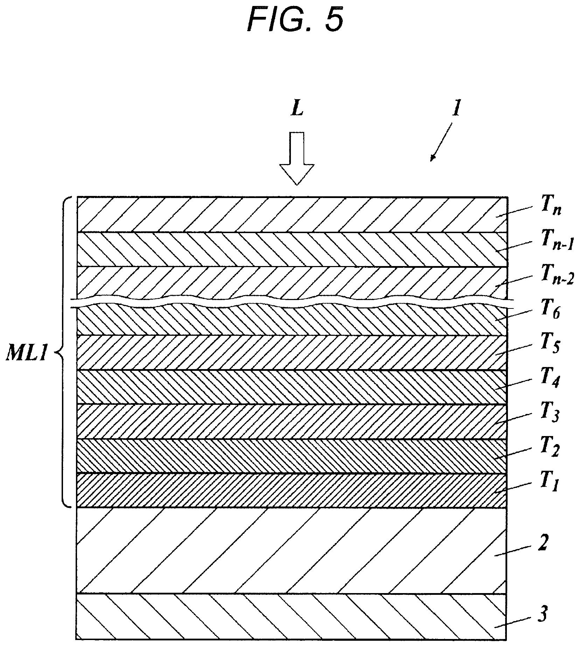

Similarly, Fig. 4 is a configuration diagram illustrating in detail the specific configuration of the near-infrared light shielding layer 4 in the layer arrangement of the optical film 1 illustrated in Fig. 2B, and similarly, Fig. 5 is a configuration diagram illustrating in detail the specific configuration of the near-infrared light shielding layer 4 in the layer arrangement of the optical film 1 illustrated in Fig. 2C.

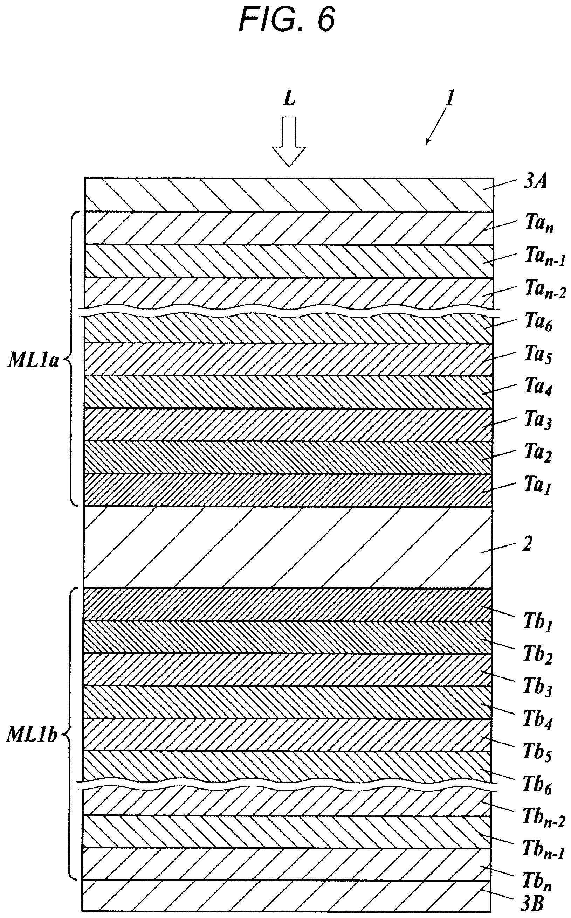

Fig. 6 shows a configuration in which the optical film 1 of the present invention has a reflective layer laminate ML1a and a reflective layer laminate ML1b containing metal oxide particles, disposed on either surface of a transparent substrate 2, and an optically functional layer 3A and an optically functional layer 3B are respectively disposed on the top surfaces of the two sides. Meanwhile, the optically functional layer 3B may be omitted.

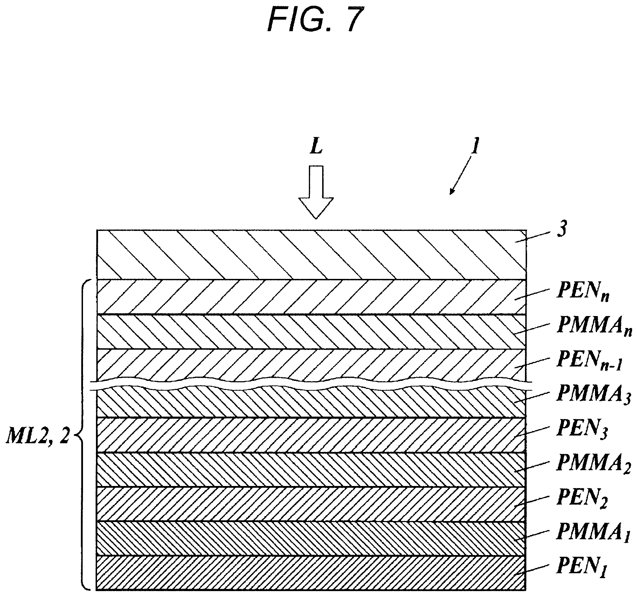

Fig. 7 is a schematic cross-sectional view diagram illustrating an example of the configuration in which the optical film of the present invention has a near-infrared shielding layer constructed from a polymer layer laminate.

In the optical film 1 of the present invention illustrated in Fig. 7, the polymer layer laminate ML2(2) that functions as both a near-infrared light shielding layer and a transparent substrate is constructed by laminating two kinds of polymer films respectively made of different materials. According to an example of the configuration, the polymer layer laminate ML2 is formed by laminating, from the lower surface side, $PEN_1$ formed from a polyethylene naphthalate (PEN) film, $PMMA_1$ formed from a polymethyl methacrylate (PMMA) film, $PEN_2$, $PMMA_2$, $PEN_3$, $PMMA_3$, (omitted), $PEN_{n-1}$, $PMMA_n$, and $PEN_n$. The total number of films to be laminated is preferably in the range of 150 to 1,000 layers. The optically functional layer 3 is disposed on this polymer layer laminate ML2. Meanwhile, in a case in which a polymer layer laminate ML2 constructed by laminating the resin films illustrated in Fig. 7 is used, since the polymer layer laminate ML2 also functions as the transparent substrate according to the present invention, it is not necessary to provide the transparent substrate 2 illustrated in Fig. 2A to Fig. 2C again. Regarding the details of these polymer layer laminates, for example, the matters described in US 6049419 B can be referred to.

Regarding the optical film of the present invention, various functional layers may be provided as necessary, in addition to the various constituent layers explained above.

The total thickness of the optical film of the present invention is not particularly limited; however, the total thickness is in the range of 250 to 1,500 μm, preferably in the range of 400 to 1,200 μm, even more preferably in the range of 600 to 1,000 μm, and particularly preferably in the range of 750 to 900 μm.

Regarding the optical characteristics of the optical film of the present invention, the visible light transmittance measured by a method equivalent to the "Testing methods for transmittance, reflectance, thermal emissivity, and solar heat gain coefficient of flat glasses" of JIS R 3106 (1998), is preferably 20% or higher, more preferably 30% or higher, and even more preferably 50% or higher.

«Various constituent materials of optical film»

The optical film of the present invention has an optically functional layer containing at least vanadium dioxide-containing fine particles and a binder resin on a transparent substrate, characterized in that the number average particle size of primary particles and secondary particles of the vanadium dioxide-containing fine particles in the optically functional layer is less than 200 nm.

According to a preferred configuration, the optical film further has a near-infrared light shielding layer having a function of shielding at least a portion of light having a wavelength in the range of 700 to 1,000 nm.

In the following description, the details of the transparent substrate, optically functional layer and near-infrared light shielding layer, which are constituent elements of the optical film of the present invention, will be explained.

[Transparent substrate]

The transparent substrate that is applicable to the present invention is not particularly limited as long as it is transparent, and examples thereof include glass, quartz, and a transparent resin film. From the viewpoint of imparting flexibility and production suitability (production process suitability), the transparent substrate is a transparent resin film. Being "transparent" as used in the present invention means that the average light transmittance in the visible light region is 20% or higher, and the average light transmittance is preferably 30% or higher, more preferably 50% or higher, and particularly preferably 70% or higher.

The thickness of the transparent substrate according to the present invention is preferably in the range of 30 to 200 μm, more preferably in the range of 30 to 100 μm, and even more preferably in the range of 35 to 70 μm. When the thickness of the transparent substrate is 30 μm or more, wrinkles and the like are not easily generated during handling, and when the thickness is 200 μm or less, during the production of a laminated glass, shape conformity to a glass curved surface is improved at the time of bonding to a glass substrate.

It is preferable that the transparent substrate according to the present invention is a biaxially oriented polyester film; however, an unstretched polyester film or a polyester film that has been stretched at least uniaxially may also be used. From the viewpoint of increasing strength and suppressing thermal expansion, a stretched film is preferred. Particularly, when a laminated glass provided with the optical film of the present invention is used as a windshield for a car, a stretched film is more preferred.

In regard to the transparent substrate according to the present invention, from the viewpoint of preventing wrinkle production in the optical film or cracking of the infrared reflective layer, the thermal shrinkage ratio at a temperature of 150°C is preferably in the range of 0.1% to 3.0%, more preferably in the range of 1.5% to 3.0%, and even more preferably 1.9% to 2.7%.

The transparent substrate that is applicable to the optical film of the present invention is not particularly limited as long as it is transparent; however, it is preferable to use various transparent resin film, and for example, a polyolefin film (for example, polyethylene or polypropylene), a polyester film (for example, polyethylene terephthalate or polyethylene naphthalate), a polyvinyl chloride or a triacetyl cellulose film can be used. Preferred examples include a polyester film and a triacetyl cellulose film.

The polyester film (hereinafter, simply referred to as polyester) is not particularly limited; however, a polyester having a dicarboxylic acid component and a diol component as main constituent components and having film-forming properties is preferred. Examples of the dicarboxylic acid component as a main constituent component include terephthalic acid, isophthalic acid, phthalic acid, 2,6-naphthalenedicarboxylic acid, 2,7-naphthalenedicarboxylic acid, diphenylsulfone dicarboxylic acid, diphenyl ether dicarboxylic acid, diphenylethane dicarboxylic acid, cyclohexanedicarboxylic acid, diphenyldicarboxylic acid, diphenyl thioether dicarboxylic acid, diphenyl ketone dicarboxylic acid, and phenylindane dicarboxylic acid. Examples of the diol component include ethylene glycol, propylene glycol, tetramethylene glycol, cyclohexanedimethanol, 2,2-bis(4-hydroxyphenyl)propane, 2,2-bis(4-hydroxyethoxyphenyl)propane, bis(4-hydroxyphenyl)sulfone, bisphenol fluorene dihydroxyethyl ether, diethylene glycol, neopentyl glycol, hydroquinone, and cyclohexanediol.

Among the polyesters that contain these as main constituent components, from the viewpoints of transparency, mechanical strength, dimensional stability and the like, polyesters containing terephthalic acid or 2,6-naphthalenedicarboxylic acid as the dicarboxylic acid component and ethylene glycol or 1,4-cyclohexanedimethanol as the diol component are preferred. Moreover, a polyester containing polyethylene terephthalate or polyethylene naphthalate as a main constituent component, a copolymerized polyester formed from terephthalic acid, 2,6-naphthalenedicarboxylic acid and ethylene glycol, and a polyester containing a mixture of two or more kinds of these polyesters as a main constituent component are preferred.

In a case in which a transparent resin film is used as the transparent substrate according to the present invention, fine particles may be incorporated into the film in order to facilitate handling, to the extent that transparency is not impaired. Examples of the fine particles that are used for the present invention include inorganic particles of calcium carbonate, calcium phosphate, silica, kaolin, talc, titanium dioxide, alumina, barium sulfate, calcium fluoride, lithium fluoride, zeolite, molybdenum sulfide and the like; crosslinked polymer particles; and organic fine particles of calcium oxalate and the like. Examples of the method of adding fine particles include a method of adding fine particles by incorporating the fine particles into a polyester that is used as a raw material; and a method of directly adding fine particles to the extruder. Among these, any one method may be employed, or two methods may be used in combination. According to the present invention, additives may also be added as necessary, in addition to the fine particles. Examples of such additives include a stabilizer, a lubricating agent, a crosslinking agent, an antiblocking agent, an oxidation inhibitor, a dye, a pigment, and an ultraviolet absorber.

The transparent resin film as a transparent substrate can be produced by a general film forming method that is conventionally known. For example, when a resin that is used as a material is melted using an extruder, extruded through an annular die or a T-die, and rapidly cooled, an unstretched transparent resin film that is substantially amorphous and unoriented can be produced. Furthermore, a stretched transparent resin film can be produced by stretching an unstretched transparent resin film in the flow (longitudinal axis) direction of the transparent resin film, or a direction perpendicular to the flow direction (transverse axis) of the transparent resin film, by means of a known method such as uniaxial stretching, tenter type sequential biaxial stretching, tenter type simultaneous biaxial stretching, or tubular type simultaneous biaxial stretching. The stretch ratio used in this case can be appropriately selected in accordance with the resin that is used a raw material of the transparent resin film; however, the stretch ratio is preferably 2 to 10 times respectively in the longitudinal axis direction and the transverse axis direction.

Furthermore, the transparent resin film may also be subjected to a relaxation treatment and an offline heat treatment, from the viewpoint of dimensional stability. It is preferable that a relaxation treatment is carried out by a step of thermally fixing the polyester film during a stretching film-forming step, and then winding the polyester film into a roll inside a lateral stretching tenter or after having passed through a tenter. It is preferable that the relaxation treatment is carried out in a temperature range of 80°C to 200°C as the treatment temperature, and more preferably in the temperature range of 100°C to 180°C. Furthermore, it is preferable that the relaxation treatment is carried out at a relaxation ratio in the range of 0.1% to 10% in both the longitudinal direction and the width direction, and more preferably, the relaxation treatment is carried out at a relaxation ratio of 2% to 6%. When the relaxation-treated resin film is subjected to an offline heat treatment, heat resistance is enhanced, and satisfactory dimensional stability is obtained.

It is preferable to form an undercoating layer by applying an undercoating layer coating liquid in-line on the transparent resin film on one surface or both surfaces during the film-forming operation. According to the present invention, the application of undercoating during the film-forming operation is referred to as in-line undercoating. Examples of the resin that is used for an undercoating layer coating liquid useful for the present invention include a polyester resin, an acrylic-modified polyester resin, a polyurethane resin, an acrylic resin, a vinyl resin, a vinylidene chloride resin, a polyethyleneimine vinylidene resin, a polyethyleneimine resin, a polyvinyl alcohol resin, a modified polyvinyl alcohol resin, and gelatin. All of these can be preferably used. Conventionally known additives may also be incorporated into these undercoating layer coating liquids. The undercoating layer coating liquid can be applied by a known method such as roll coating, gravure coating, knife coating, dip coating, or spray coating. The coating amount of the undercoating layer coating liquid is preferably in the range of 0.01 to 2.0 $g/m^2$ (dried state).

[Optically functional layer]

[Vanadium dioxide-containing fine particles]

The optically functional layer according to the present invention is characterized in that vanadium dioxide-containing fine particles having a number average particle size of all the particles including primary particles and secondary particles of less than 200 nm exist in a binder resin in a dispersed state.

There are no particular limitations on the crystal type of the vanadium dioxide-containing fine particles according to the present invention; however, from the viewpoint of efficiently manifesting thermochromic properties (automatic dimming properties), it is particularly preferable to use rutile type vanadium dioxide-containing fine particles ($VO_2$-containing fine particles).

Rutile type $VO_2$-containing fine particles have a monoclinic structure at a temperature lower than or equal to the transition temperature, and therefore, the rutile type fine particles are also referred to as M-type. In regard to the vanadium dioxide-containing fine particles according to the present invention, $VO_2$-containing fine particles of other crystal types such as A-type or B-type may also be included to the extent that the purpose is not impaired.

The present invention is characterized in that the number average particle size of all the particles including primary particles and secondary particles of vanadium dioxide-containing fine particles in the optically functional layer is less than 200 nm.

It may be redundant, but the average particle size of the vanadium dioxide-containing fine particles in the optically functional layer can be determined according to the method described below.

First, a lateral surface of the optically functional layer containing vanadium dioxide-containing fine particles is trimmed using a microtome or the like, and a cross-section of the optically functional layer illustrated in Fig. 1 is exposed. Subsequently, the exposed cross-section is photographed at a magnification ratio of 10,000 times to 100,000 times using transmission electron microscopy (TEM). For all of the vanadium dioxide-containing fine particles existing in a certain region of the photographed cross-section, the particle sizes are measured. At this time, the number of the vanadium dioxide-containing fine particles to be measured is preferably in the range of 50 to 100. The group of vanadium dioxide-containing fine particles thus photographed includes primary particles and secondary particles in mixture as illustrated in Fig. 1, and the particle size of the primary particles of vanadium dioxide is obtained by measuring the diameters of various independent particles. If the particles are not spherical in shape, the projected area of a particle is calculated as the area of an equivalent circle, and the diameter of the circle is regarded as the particle size. On the other hand, for the secondary particles of vanadium dioxide in which two or more particles exist in an aggregated state, the projected area of an aggregate as a whole is determined, subsequently the projected area is calculated as the area of an equivalent circle, and the diameter of the circle is regarded as the particle size, while such an aggregated secondary particle is regarded as one particle. For the diameters of the primary particles and the secondary particles determined as described above, the number average diameters are respectively determined. Since the particle distribution is non-uniform in a cross-section that has been cut out, such measurement of the number average diameter is performed at 10 sites in different cross-sectional regions, 500 to 1,000 particles are measured as the total number of particles, and the number average diameter of all the particles is determined. This is referred to as the number average particle size as used in the present invention.

The number average particle size of all the particles including primary particles and secondary particles according to the present invention is characterized by being less than 200 nm; however, the number average particle size is preferably in the range of 1 to 180 nm, more preferably in the range of 5 to 100 nm, and even more preferably in the range of 10 to 80 nm.

Furthermore, the primary particle size of the vanadium dioxide-containing fine particles is preferably in the range of 1 to 150 nm, more preferably in the range of 5 to 100 nm, and most preferably in the range of 10 to 50 nm.

In regard to the optical film of the present invention, the ratio of the particle number of primary particles of the vanadium dioxide-containing fine particles in the optically functional layer that can be determined by the measurement method described above is preferably 30% by number or more of the total number of particles of primary particles and secondary particles, more preferably 60% by number or more, and particularly preferably 80% by number or more. An ideal upper limit is 100% by number; however, the maximum value in the present condition is 95% by number or less.

Furthermore, the aspect ratio of the vanadium dioxide-containing fine particles is preferably in the range of 1.0 to 3.0.

In the vanadium dioxide-containing fine particles having such a feature, the aspect ratio is sufficiently small, and the shape becomes close to a spherical shape. When the shape is isotropic, dispersibility in a case in which the fine particles are added to a solution becomes satisfactory. In addition, since the particle size in a single crystal state is sufficiently small, satisfactory thermochromic properties can be manifested compared to the conventional fine particles.

The vanadium dioxide-containing fine particles according to the present invention may contain, in addition to vanadium dioxide ($VO_2$), at least one element selected from the group consisting of, for example, tungsten (W), molybdenum (Mo), niobium (Nb), tantalum (Ta), tin (Sn), rhenium (Re), iridium (Ir), Osmium (Os), ruthenium (Ru), germanium (Ge), chromium (Cr), iron (Fe), gallium (Ga), aluminum (Al), fluorine (F) and phosphorus (P). As a result of addition of such elements, the phase transition characteristics (particularly, dimming temperature) of the vanadium dioxide-containing fine particles can be controlled. The total amount of such additives (dopants) with respect to the finally obtainable vanadium dioxide-containing fine particles is sufficient at about 0.1 atom% to 5.0 atom% with respect to vanadium (V) atoms.

Furthermore, the concentration of the vanadium dioxide-containing fine particles in the optically functional layer according to the present invention is not particularly limited; however, the concentration is in general preferably in the range of 5% to 60% by mass, more preferably in the range of 5% to 40% by mass, and even more preferably in the range of 5% to 30% by mass, with respect to the total mass of the optically functional layer.

(Method for producing vanadium dioxide-containing fine particles)

Generally, examples of the method for producing vanadium dioxide-containing fine particles include a method of pulverizing a $VO_2$ sintered body synthesized by a solid phase method; and an aqueous synthesis method of growing particles while synthesizing $VO_2$ in the liquid phase using divanadium pentoxide ($V_2O_5$).

Regarding the method for producing vanadium dioxide-containing fine particles according to the present invention is preferably an aqueous synthesis method of growing particles while synthesizing $VO_2$-containing fine particles in the liquid phase using $V_2O_5$ as a raw material, from the viewpoint that the average primary particle size is small, and the fluctuation in the particle size can be suppressed.

Furthermore, examples of the aqueous synthesis method include a hydrothermal synthesis method, and an aqueous synthesis method of using a supercritical state. The details of the hydrothermal synthesis method will be described below. In regard to the details of the aqueous synthesis method using a supercritical state (also called supercritical hydrothermal synthesis method), reference can be made to the production methods described in paragraph (0011) of JP 2010-58984 A and paragraphs (0015) to (0018) of JP 2010-58984 A.

Among the aqueous synthesis methods described above, according to the present invention, the optically functional layer according to the present invention, in which the number average particle size of all the particles including primary particles and secondary particles of vanadium dioxide-containing fine particles is less than 200 nm, by applying a hydrothermal synthesis method, producing a water-based dispersion liquid including vanadium dioxide-containing fine particles by an aqueous synthesis method, mixing the water-based dispersion liquid with a water-based binder resin solution in a dispersed state in which the vanadium dioxide-containing fine particles are separated to form primary particles, without drying the vanadium dioxide-containing fine particles in the water-based dispersion liquid, thereby producing a coating liquid for forming an optically functional layer, and forming an optically functional layer using the coating liquid for forming an optically functional layer in the above-described state. Furthermore, regarding the method for producing vanadium dioxide-containing fine particles, vanadium dioxide-containing fine particles can also be produced by adding fine particles such as minute $TiO_2$ particles that serve as nuclei for particle growth as necessary, and growing the nucleus particles.

Next, the method for producing vanadium dioxide-containing fine particles according to a hydrothermal synthesis method suitable for the present invention will be explained in more detail.

In the following description, a production process for vanadium dioxide-containing fine particles according to a representative hydrothermal synthesis method will be described.

(Step 1)

A substance (I) containing vanadium (V), hydrazine ($N_2H_4$) or a hydrate thereof ($N_2H_4 \cdot nH_2O$), and water were mixed, and solution (A) is prepared. This solution (A) may be an aqueous solution in which the substance (I) is dissolved in water, or may be a suspension liquid in which the substance (I) is dispersed in water.

Examples of the substance (I) include divanadium pentoxide ($V_2O_5$), ammonium vanadate ($NH_4VO_3$), vanadium oxytrichloride ($VOCl_3$), and sodium metavanadate ($NaVO_3$). Meanwhile, the substance (I) is not particularly limited as long as it is a compound containing pentavalent vanadium (V). Hydrazine ($N_2H_4$) and a hydrate thereof ($N_2H_4 \cdot nH_2O$) function as reducing agents for the substance (I), and have a property of easily dissolving water.

In order to add an element to single crystal fine particles of vanadium dioxide ($VO_2$) that are finally obtainable, the solution (A) may further include a substance (II) containing an element to be added. Examples of the element to be added include tungsten (W), molybdenum (Mo), niobium (Nb), tantalum (Ta), tin (Sn), rhenium (Re), iridium (Ir), osmium (Os), ruthenium (Ru), germanium (Ge), chromium (Cr), iron (Fe), gallium (Ga), aluminum (Al), fluorine (F), and phosphorus (P).

By adding these elements to the vanadium dioxide ($VO_2$)-containing single crystal fine particles that are finally obtained, the thermochromic properties, particularly the transition temperature, of the vanadium dioxide-containing fine particles can be controlled.

Furthermore, this solution (A) may further include a substance (III) having oxidizing properties or reducing properties. Examples of the substance (III) include hydrogen peroxide ($H_2O_2$). By adding a substance C having oxidizing properties or reducing properties, the pH of the solution can be adjusted, or a substance containing vanadium (V), which serves as substance (I), can be uniformly dissolved.

(Step 2)

Next, a hydrothermal reaction treatment is carried out using the solution (A) thus prepared. Here, the "hydrothermal reaction" means a chemical reaction occurring in hot water having a temperature and a pressure that are lower than the critical point of water (374°C, 22 MPa) (subcritical water). The hydrothermal reaction is carried out, for example, inside an autoclave apparatus. Single crystal fine particles containing vanadium dioxide ($VO_2$) are obtained by a hydrothermal reaction treatment.

The conditions for the hydrothermal reaction treatment (for example, the amounts of reactants, treatment temperature, treatment pressure, and treatment time) are appropriately set; however, the temperature for the hydrothermal reaction treatment is, for example, in the range of 250°C to 350°C, preferably in the range of 250°C to 300°C, and more preferably in the range of 250°C to 280°C. By lowering the temperature, the particle size of the single crystal fine particles thus obtainable can be made smaller; however, if the particle size is excessively small, crystallinity is decreased. Furthermore, the duration for the hydrothermal reaction treatment is preferably, for example, in the range of 1 hour to 5 days. By extending the duration, the particle size and the like of the single crystal fine particles thus obtainable can be controlled; however, with an excessively long treatment time, the amount of energy consumption is increased.

(Step 3)

If necessary, the surface of the vanadium dioxide-containing fine particles thus obtained may be subjected to a coating treatment with a resin or a surface modification treatment. Thereby, the surface of the vanadium dioxide-containing fine particles is protected, and surface-modified single crystal fine particles can be obtained. In the present invention, above all, it is a preferred embodiment that the surface of the vanadium dioxide-containing fine particles is coated with a resin that is the same as the water-based binder resin or a resin of the same kind. The term "coating" as used in the present invention may be a state in which the entire surface of the vanadium dioxide-containing fine particles is completely covered by the resin, or may also be in a state in which a portion of the particle surface is covered by the resin.

<Coating of vanadium dioxide-containing fine particle surface with resin>

In regard to the vanadium dioxide-containing fine particles according to the present invention, it is preferable that the fine particles are produced, and before the fine particles are mixed with a water-based binder resin solution that is used for forming an optically functional layer, the particle surface is coated with a resin that is the same as the water-based binder resin, or a resin of the same kind.

The term "same resin" as used in the present invention means that all the requirements of "having the same basic skeleton of the resin", "having the same constituent components of the resin", "having the same constituent components and proportions thereof", "having the same degree of polymerization or the same molecular weight", and "having the same degree of saponification" are satisfied. Furthermore, according to the present invention, the term "resin of the same kind" is considered to have the same basic skeleton of the resin.

As described above, when the surface of the vanadium dioxide-containing fine particles is coated with a resin that is the same as the water-based binder resin, or a resin of the same kind, aggregation of the vanadium dioxide-containing fine particles can be prevented when the fine particles are mixed with the water-based binder resin solution.

In addition, since the interaction between the vanadium dioxide-containing fine particles and the water-based binder resin is strong, the vanadium dioxide-containing fine particles may crosslink and gelate the water-based binder resin. Thus, such gelation may be prevented by coating the surface of the vanadium dioxide-containing fine particles with the water-based binder resin.

Regarding the method of coating the surface of the vanadium dioxide-containing fine particles with a resin that is the same as the water-based binder resin or a resin of the same kind, a method of performing synthesis by incorporating the fine particles and the resin together in the synthesis stages of Step 1 to Step 3 described above; a method of synthesizing the vanadium dioxide-containing fine particles, and then adding the water-based binder resin before the ultrafiltration treatment is applied; or a method of adding the resin component to a dispersion liquid containing vanadium dioxide-containing fine particles before the fine particles are mixed into the water-based binder resin solution, may be used.

Among the methods described above, incorporating the two components together in the synthesis stage is a preferred method from the viewpoint of obtaining effects such as that the vanadium dioxide-containing fine particles can be further micronized, monodispersibility of the vanadium dioxide-containing fine particles is also enhanced, and generation of secondary particles during the stage for synthesis of the vanadium dioxide-containing fine particles can be suppressed. The amount of the resin component to be added is preferably in the range of 0.1% to 50% by mass, more preferably in the range of 0.3% to 10% by mass, and most preferably in the range of 0.5% to 5% by mass, with respect to the total mass of the vanadium dioxide-containing fine particles.

The resin component to be used to coat the surface of the vanadium dioxide-containing fine particles is a resin that is the same as the water-based binder resin or a resin of the same kind; however, a resin having a relatively low molecular weight can be preferably utilized.

The resin component is not limited as long as the resin is the same as the resin that is applied as the water-based binder resin or a resin of the same kind. For example, as a cellulose compound, examples include METOLOSE 60SH-03 and SM-4 (all manufactured by Shin-Etsu Chemical Co., Ltd., nonionic cellulose ethers), and as a polyvinyl alcohol compound, a resin material having a degree of polymerization of 500 or less can be preferably used, while examples thereof include KURARAY POVAL PVA102 (degree of polymerization 200), PVA103 (degree of polymerization 300), PVA105 (degree of polymerization 500), PVA203 (degree of polymerization 300), PVA205 (degree of polymerization), PVA403 (degree of polymerization 300), PVA405 (degree of polymerization), and EXCEVAL RS-4104 (degree of polymerization 400) (all manufactured by Kuraray Co., Ltd.).

Regarding the method for checking the state in which the surface of the vanadium dioxide-containing fine particles is coated with a resin that is the same as the water-based binder resin or a resin of the same kind, the state can be checked by drying a dispersion liquid of the vanadium dioxide-containing fine particles, and observing the residue by transmission electron microscopy or scanning electron microscopy.

Furthermore, the optical characteristics (dimming characteristics) of the vanadium dioxide-containing fine particles can be controlled thereby. The coating treatment or the surface modification treatment may be carried out using, for example, a silane coupling agent.

By going through the above-described Step 1 to Step 3, a dispersion liquid containing vanadium dioxide ($VO_2$)-containing single crystal fine particles having thermochromic properties is obtained.

<Treatment for removing impurities from vanadium dioxide-containing fine particle dispersion liquid>

A dispersion liquid of the vanadium dioxide-containing fine particles produced by the aqueous synthesis method include impurities such as the residue produced in the course of synthesis, and the impurities may trigger generation of secondary aggregated particles when an optically functional layer is formed, and become causative of deterioration of the optically functional layer during long-term storage. Therefore, it is preferable to remove impurities in advance in the stage of dispersion liquid.

Regarding the method for removing impurities from the vanadium dioxide-containing fine particle dispersion liquid, a conventionally known means for separating foreign materials or impurities can be applied. For example, a method of subjecting the vanadium dioxide-containing fine particle dispersion liquid to centrifugation to precipitate vanadium dioxide-containing fine particles, removing impurities in the supernatant, adding a dispersing medium again thereto, and dispersing the fine particles, may be used, or a method of removing impurities out of the system using an exchange membrane such as an ultrafiltration membrane may also be used. However, from the viewpoint of preventing aggregation of vanadium dioxide-containing fine particles, a method of using an ultrafiltration membrane is most preferred.

Examples of the material for the ultrafiltration membrane include a cellulose-based material, a polyether sulfone-based material, and a polytetrafluoroethylene (abbreviation: PTFE), and among them, it is preferable to use a polyether sulfone-based material or PTFE.

[Binder resin]

Next, the binder resin that is used for forming the optically functional layer according to the present invention will be explained.

The binder resin that is applicable to the formation of the optically functional layer according to the present invention is not particularly limited; however, the binder resin is preferably a water-based binder resin.

The water-based binder resin as used in the present invention means a resin material having a dissolution ability of 0.5 g or more in 100 g of water at 20°C, and the water-based binder resin is more preferably a resin having a dissolution ability of 1.0 g or more. Furthermore, a resin which satisfies the conditions defined above in terms of solubility after being dissolved in hot water and then cooled to 20°C, is also defined as the water-based binder resin according to the present invention.

Examples of the water-based binder resin that is useful for forming the optically functional layer according to the present invention include proteins such as gelatins, graft polymers of gelatin with other polymers, albumin, and casein; sugar derivatives such as celluloses, sodium alginate, cellulose sulfuric acid esters, dextrin, dextran, and dextran sulfate; naturally occurring materials such as polysaccharide thickeners; polyvinyl alcohols; polyvinylpyrrolidones; acrylic resins such as polyacrylic acid, an acrylic acid-acrylonitrile copolymer, a potassium acrylate-acrylonitrile copolymer, a vinyl acetate-acrylic acid ester copolymer, and an acrylic acid-acrylic acid ester copolymer; styrene-acrylic acid resins such as a styrene-acrylic acid copolymer, a styrene-methacrylic acid copolymer, a styrene-methacrylic acid-acrylic acid ester copolymer, a styrene-$\alpha$-methylstyrene-acrylic acid copolymer, and a styrene-$\alpha$-methylstyrene-acrylic acid-acrylic acid ester copolymer; a styrene-sodium styrenesulfonate copolymer, a styrene-2-hydroxyethyl acrylate copolymer, a styrene-2-hydroxyethyl acrylate-potassium styrenesulfonate copolymer, a styrene-maleic acid copolymer, a styrene-maleic anhydride copolymer, a vinylnaphthalene-acrylic acid copolymer, a vinylnaphthalene-maleic acid copolymer; and vinyl acetate-based copolymers and salts thereof, such as a vinyl acetate-maleic acid ester copolymer, a vinyl acetate-crotonic acid copolymer, and a vinyl acetate-acrylic acid copolymer.

Among them, the water-based binder resin is preferably a polymer containing a repeating unit component having a hydroxyl group at a proportion of 50 mol% or more, which has high affinity with vanadium dioxide-containing fine particles and has a superior effect of preventing aggregation of particles even at the time of drying upon film forming. Examples of such a polymer include celluloses, polyvinyl alcohols, and acrylic resins having hydroxyl groups, and among them, polyvinyl alcohols and celluloses can be most preferably utilized.

Furthermore, according to the present invention, it is a preferred embodiment that the water-based binder resin that constitutes the optically functional layer, and the first water-soluble binder resin or the second water-soluble binder resin that constitutes the reflective layer laminate that will be described below are binder resins of the same kind.

In the following description, representative water-based binder resin that are useful for forming the optically functional layer according to the present invention will be explained.

(Polyvinyl alcohols)

Regarding a polyvinyl alcohol compound that is preferably used for the present invention, a conventional polyvinyl alcohol obtainable by hydrolyzing polyvinyl acetate can be used. The polyvinyl alcohol compound will be described in detail with the explanation on the first water-soluble binder resin or the second water-soluble resin that constitutes the reflective layer laminate that will be described in detail below.

The polyvinyl alcohols include, in addition to conventional polyvinyl alcohol, modified polyvinyl alcohols such as a polyvinyl alcohol having cationically modified terminals, and an anionically modified polyvinyl alcohol having anionic groups.

Examples of the cationically modified polyvinyl alcohol include the polyvinyl alcohols described in JP 61-10483 A, which have primary to tertiary amino groups, or a quaternary ammonium group in the main chain or a side chain of the polyvinyl alcohol. The cationically modified polyvinyl alcohol is obtained by saponifying a copolymer of an ethylenically unsaturated monomer having a cationic group and vinyl acetate.

Examples of the ethylenically unsaturated monomer having a cationic group include trimethyl-(2-acrylamido-2,2-dimethylethyl)ammonium chloride, trimethyl-(3-acrylamido-3,3-dimethylpropyl)ammonium chloride, N-vinylimidazole, N-vinyl-2-methylimidazole, N-(3-dimethylaminopropyl)methacrylamide, hydroxyethyltrimethylammonium chloride, trimethyl-(2-methacrylamidopropyl)ammonium chloride, and N-(1,1-dimethyl-3-dimethylaminopropyl)acrylamide. The proportion of the cationic modifying group-containing monomer in the cationically modified polyvinyl alcohol is 0.1 mol% to 10 mol%, and preferably 0.2 mol% to 5 mol%, with respect to vinyl acetate.

Examples of the anionically modified polyvinyl alcohol include the polyvinyl alcohol having an anionic group described in JP 1-206088 A; the copolymer of vinyl alcohol and a vinyl compound having a water-soluble group as described in JP 61-237681 A and JP 63-307979 A; and the modified polyvinyl alcohol having a water-soluble group as described in JP 7-285265 A.

Furthermore, examples of the nonionically modified polyvinyl alcohol include the polyvinyl alcohol derivative obtained by adding a polyalkylene oxide group to a portion of vinyl alcohol as described in JP 7-9758 A; and the block copolymer of a vinyl compound having a hydrophobic group and vinyl alcohol as described in JP 8-25795 A. Regarding the polyvinyl alcohol, two or more kinds having different degrees of polymerization or different types of modification may be used in combination.

Regarding the polyvinyl alcohols used for the present invention, a synthetic product may be used, or a commercially available product may also be used. Examples of commercially available products used as polyvinyl alcohol include PVA-102, PVA-103, PVA-105, PVA-110, PVA-117, PVA-120, PVA-124, PVA-203, PVA-205, PVA-210, PVA-217, PVA-220, PVA-224, and PVA-235 (all manufactured by Kuraray Co. , Ltd.); and JC-25, JC-33, JF-03, JF-04, JF-05, JP-03, JP-04JP-05, and JP-45 (all manufactured by Japan Vam & Poval Co., Ltd.).

(Celluloses)

The celluloses that can be used for forming the optically functional layer according to the present invention are preferably water-soluble cellulose derivatives, and examples include water-soluble cellulose derivatives such as carboxymethyl cellulose (cellulose carboxymethyl ether), methyl cellulose, hydroxymethyl cellulose, hydroxyethyl cellulose, and hydroxypropyl cellulose; carboxylic acid group-containing celluloses such as carboxymethyl cellulose (cellulose carboxymethyl ether) and carboxyethyl cellulose. Other examples include cellulose derivatives such as nitrocellulose, cellulose acetate propionate, cellulose acetate, and cellulose sulfuric acid esters.

According to the present invention, it is a preferred embodiment that the water-based binder resin is a polymer containing a repeating unit having a hydroxyl group at a proportion of 50 mol% or more; however, in the case of a cellulose compound, the repeating unit component originally has three hydroxyl groups, and these three hydroxyl groups are partially substituted. When it is said that the repeating unit component having a hydroxyl group is included at a proportion of 50 mol% or more, it is implied that a repeating unit component having a hydroxyl group as this substituent, or a repeating unit component having one or more unsubstituted hydroxyl groups left is included at a proportion of 50 mol% or more.

(Gelatins)

Regarding the gelatin that is applicable to the present invention, various gelatins that have been hitherto widely used in the field of silver halide photographic sensitive materials can be applied, and for example, acid-treated gelatin, alkali-treated gelatin, enzymatically treated gelatin that is subjected to an enzymatic treatment in the production process for gelatin, and gelatin derivatives, that is, gelatins that have an amino group, an imino group, a hydroxyl group and a carboxyl group as functional groups in the molecule and have been modified by treating with reagents having groups obtainable by reacting with those functional groups, may also be used. General production methods for gelatin are well known, and for example, the descriptions in T.H. James: The Theory of Photographic Process, 4th ed., 1977 (Macmillan), page 55; Kagaku Shashin Benran (Manual of Scientific Photography) (Vol. 1), pages 72-75 (Maruzen); Shashin Kogaku no Kiso - Ginsho Shashin Hen (Fundamentals of Photographic Engineering - Silver Salt Photography), pages 119-124 (Corona); and the like can be referred to. Also, the gelatins described in Research Disclosure, Vol. 176, No. 17643 (December 1978), page IX, may be used.

In a case in which gelatin is used as the water-based binder resin, a curing agent for gelatin may be added as necessary. Regarding the curing agent that can be used, known compounds that are used as conventional curing agents for photographic emulsion layers can be used. Examples thereof include organic curing agents such as a vinylsulfone compound, a urea-formalin condensate, a melanin-formalin condensate, an epoxy-based compound, an acridine-based compound, an active olefin, and an isocyanate-based compound; and inorganic polyvalent metal salts such as chromium, aluminum, and zirconium.

(Polysaccharide thickeners)

There are no particular limitations on the polysaccharide thickeners that can be used for the present invention, and examples include natural simple polysaccharides that are generally known, natural composite polysaccharides, synthetic simple polysaccharides, and synthetic composite polysaccharides. Regarding the details about these polysaccharides, reference can be made to "Seikagaku Jiten (Dictionary of Biochemistry) (2nd Ed.), published by Tokyo Kagaku Doj in Co., Ltd. "; "Shokuhin Kogyo (Food Industry) ", Vol. 31 (1988), page 21; and the like.

A polysaccharide thickener as used in the present invention is a polysaccharide which is a polymer of a saccharide, and has a characteristic that the viscosity at the time of low temperature and the viscosity at high temperature is large due to the difference in the intermolecular hydrogen bonding force depending on temperature, as a result of having a large number of hydrogen bonding groups in the molecule. When metal oxide fine particles are added thereto, the polysaccharide causes viscosity increase as a result of hydrogen bonding with the metal oxide fine particles at low temperature, and regarding the range of viscosity increase, when the polysaccharide is added, the polysaccharide has a viscosity increasing ability of causing an increase in viscosity at 15°C of 1.0 mPa·s or more, preferably 5.0 mPa·s or more, and more preferably 10.0 mPa·s or more.

Examples of the polysaccharide thickener that is applicable to the present invention include galactans (for example, agarose and agaropectin), galactomannoglycans (for example, locust bean gum and guaran), xyloglucans (for example, tamarind gum), glucomannoglycans (for example, konj ac mannan, wood-derived glucomannan, and xanthan gum), galactoglucomannoglycans (for example, conifer wood-derived glycans), arabinogalactoglycans (for example, soybean-derived glycans and microbial-derived glycans), glucorhamnoglycans (for example, gellan gum), glycosaminoglycans (for example, hyaluronic acid and keratan sulfate), and natural polymeric polysaccharides derived from red algae, such as alginic acid and alginic acid salts, agar, κ-carrageenan, λ-carrageenan, ι -carrageenan and furcellaran. From the viewpoint that the dispersion stability of the vanadium dioxide-containing fine particles co-existing in the coating liquid will not be affected, preferably, it is preferable that the constituent units of the polysaccharide do not have a carboxylic acid group or a sulfonic acid group. Such polysaccharides are preferably polysaccharides formed from pentoses only, such as L-arabitose, D-ribose, 2-deoxyribose and D-xylose; or polysaccharides formed from hexoses only, such as D-glucose, D-fructose, D-mannose and D-galactose. Specifically, tamarind seed gum, which is known as a xyloglucan having glucose as a main chain and xylose as a side chain; guar gum, which is known as a galactomannan having mannose as a main chain and glucose as a side chain; cationized guar gum, hydroxypropyl guar gum, locust bean gum, tara gum; and arabinogalactan having galactose as a main chain and arabinose as a side chain, can be preferably used. According to the present invention, tamarind gum, guar gum, cationized guar gum, and hydroxypropyl guar gum are particularly preferred.

(Polymers having reactive functional groups)

As the water-based binder resin hat is applicable to the present invention, polymers having reactive functional groups may be mentioned. Examples thereof include polyvinylpyrrolidones; acrylic resins such as polyacrylic acid, an acrylic acid-acrylonitrile copolymer, a potassium acrylate-acrylonitrile copolymer, a vinyl acetate-acrylic acid ester copolymer, and an acrylic acid-acrylic acid ester copolymer; styrene-acrylic acid resins such as a styrene-acrylic acid copolymer, a styrene-methacrylic acid copolymer, a styrene-methacrylic acid-acrylic acid ester copolymer, a styrene-α-methylstyrene-acrylic acid copolymer, and a styrene-α-methylstyrene-acrylic acid-acrylic acid ester copolymer; a styrene-sodium styrenesulfonate copolymer, a styrene-2-hydroxyethyl acrylate copolymer, a styrene-2-hydroxyethyl acrylate-potassium sytrenesulfonate copolymer, a styrene-maleic acid copolymer, a styrene-maleic anhydride copolymer, a vinylnaphthalene-acrylic acid copolymer, a vinylnaphthalene-maleic acid copolymer; vinyl acetate-based copolymers such as a vinyl acetate-maleic acid ester copolymer, a vinyl acetate-crotonic acid copolymer, and a vinyl acetate-acrylic acid copolymer; and salts thereof. Among these, particularly preferred examples include polyvinylpyrrolidones and copolymers containing these.

Furthermore, in regard to details of the acrylic polymer having hydroxyl groups, reference can be made to the matters described in paragraphs (0049) to (0052) of WO 2011/148931 A.

[Other additives of optically functional layer]

Various additives can be added to the optically functional layer according to the present invention to the extent that the purpose and effects of the present invention are not impaired, and such additives will be mentioned below.
Examples include various known additives such as the ultraviolet absorbers described in JP 57-74193 A, JP 57-87988 A, and JP 62-261476 A; the discoloration preventing agents such as JP 57-74192 A, JP 57-87989 A, JP 60-72785 A, JP 61-146591 A, JP 1-95091 A, and JP 3-13376 A; various anionic, cationic or nonionic surfactants; the fluorescent brightening agents described in JP 59-42993 A, JP 59-52689 A, JP 62-280069 A, JP 61-242871 A, and JP 4-219266 A; pH adjusting agents such as sulfuric acid, phosphoric acid, acetic acid, citric acid, sodium hydroxide, potassium hydroxide, and potassium carbonate; an antifoaming agent; a lubricating agent such as diethylene glycol; an antiseptic agent, an antifungal agent, an antistatic agent, a matting agent, a thermal stabilizer, an oxidation inhibitor, a flame retardant, a crystal nucleating agent, inorganic particles, organic particles, a thinning agent, a lubricating agent, an infrared absorber, a dye, and a pigment.

[Method for forming optically functional layer]

The method for forming the optically functional layer according to the present invention is not particularly limited; however, according to the present invention, a method for forming an optically functional layer, after vanadium dioxide-containing fine particles are produced by an aqueous synthesis method by the method described above, by mixing a dispersion liquid in which vanadium dioxide-containing fine particles exist in a state of being separate apart without associating, with a water-based binder resin solution produced by dissolving the water-based binder resin in a water-based solvent, without going through a process of drying the fine particles, thereby producing a water-based coating liquid for forming an optically functional layer, using this coating liquid for forming an optically functional layer to apply the coating liquid on a transparent substrate by a wet coating method, and drying the coating liquid, is preferred.

The "water-based solvent" used for producing the coating liquid for an optical functional layer means a solvent in which 50% by mass or more of the component is constituted from water. The water-based solvent may be definitely 100% pure water that does not include other solvents, and in a case in which dispersion stability of the vanadium dioxide-containing fine particles is considered, it is preferable that the content of other organic solvents is small. Regarding the solvents that constitute the water-based solvent, there are no particular limitations on the components other than water as long as the components are solvents compatible with water. However, alcohol-based solvents can be preferably used, and isopropyl alcohol having a boiling point that is relatively close to that of water is preferred.

The wet coating method used for forming the optically functional layer is not particularly limited, and examples thereof include a roll coating method, a rod bar coating method, an air knife coating method, a spray coating method, a slide type curtain coating method, the slide hopper coating method described in US 2761419 B and US 2761791 B, and an extrusion coating method.

<<Near-infrared shielding layer>>

In regard to the optical film of the present invention, a configuration in which a near-infrared light shielding layer having a function of shielding at least a portion of light having a wavelength in the range of 700 to 1,000 nm is provided in addition to the optically functional layer, is a preferred embodiment.

Examples of the near-infrared shielding layer as used in the present invention include a layer containing an inorganic or organic infrared absorber, a metal thin film layer, and a dielectric multilayer laminate; however, among them, a dielectric multilayer laminate is preferred.

Examples of the inorganic infrared absorber include tin-doped indium oxide (abbreviation: ITO), antimony-doped tin oxide (abbreviation: ATO), zinc antimonate, lanthanum hexaboride ($LaB_6$), and cesium-containing tungsten oxide ($Cs_{0.33}WO_3$). Examples of the organic infrared absorber include polymethine-based, phthalocyanine-based, naphthalocyanine-based, metal complex-based, aminium-based, immonium-based, diimmonium-based, anthraquinone-based, dithiometal complex-based, naphthoquinone-based, indolephenol-based, azo-based, and triallylmethane-based compounds.

It is preferable that the meta thin film layer is configured to contain silver, which has excellent infrared reflection ability, as a main component. Furthermore, it is preferable that the metal thin film layer is configured to include, in addition to silver, gold or palladium at a proportion of 2% to 5% by mass as the total number of gold atoms and palladium atoms.

Regarding a representative configuration of the dielectric multilayer laminate, reflective layer laminates ML1, ML1a and ML1b, in each of which a number of the infrared reflective layers each containing a water-soluble binder resin and metal oxide particles as explained using Fig. 3 to Fig. 6 are laminated, or a polymer layer laminate ML2 in which a number of the polymer layers explained using Fig. 7 are laminated, may be mentioned. Particularly, a reflective layer laminate in which refractive indices each containing a water-soluble binder resin and metal oxide particles are laminated is preferred. In the following description, details of the polymer layer laminate and the reflective layer laminate will be explained in detail.

[Polymer layer laminate]

The polymer layer laminate, which is one of the near-infrared shielding layer according to the present invention, is configured to include a number of first polymer layers each having a first refractive index, and a number of second polymer layers each having a second refractive index are laminated.

The first polymer layer and the second polymer are laminated on top of each other and form a polymer layer laminate. The polymer materials that constitute the first and second polymer layers may be polyesters, acrylics, and blends or copolymers of polyester and acrylics, and examples thereof include polyethylene-2,6-naphthalate (PEN), naphthalenedicarboxylic acid co-polyester (coPEN), polymethyl methacrylate (PMMA), polybutylene-2,6-naphthalate (PBN), polyethylene terephthalate (PET), naphthalenedicarboxylic acid derivatives, diol copolymers, polyether ether ketone, and syndiotactic polystyrene resin (SPS). Specific combinations of the first polymer layer and the second polymer layer include combinations of PEN/PMMA, PET/PMMA, PEN/coPEN, PEN/SPS, and PET/SPS.

Regarding specific configuration examples of the polymer layer laminate, as illustrated in Fig. 7, the polymer layer is configured to have two kinds of polymer films of different materials (PEN and PMMA) laminated. Specifically, as illustrated in Fig. 7, from the lower surface side, $PEN_1$ formed from a polyethylene naphthalate (PEN) film, $PMMA_1$ formed from a polymethyl methacrylate (PMMA) film, $PEN_2$, $PMMA_2$, $PEN_3$, $PMMA_3$, (omitted), $PEN_{n-1}$, $PMMA_n$, and $PEN_n$ are laminated and form a polymer layer laminate ML2. In a case in which a polymer layer laminate is applied, it is configured such that the polymer layer laminate also functions as a transparent substrate according to the present invention.

The total number of films to be laminated is not particularly limited; however, the total number is in general preferably in the range of 150 to 1,000 layers.

In regard to the details about these polymer layer laminates, reference can be made to the matters described in US 6049419 B.

[Reflective layer laminate]

Regarding the near-infrared shielding layer that is applicable to the optical film of the present invention, it is particularly preferable that the near-infrared shielding layer is a reflective layer laminate such as illustrated in Fig. 3 to Fig. 6.

The reflective layer laminate according to the present invention is configured to have a reflective layer laminate in which, on at least one surface side on a transparent substrate that constitutes the optical film of the present invention described above, a high refractive index infrared reflective layer (hereinafter, referred to as high refractive index layer) containing a first water-soluble binder resin and first metal oxide particles; and a low refractive index infrared reflective layer (hereinafter, referred to as low refractive index layer) containing a second water-soluble binder resin and second metal oxide particles are alternately laminated.

Furthermore, in regard to the optical film of the present invention, it is preferable that the water-based binder resin that constitutes the optically functional layer and the first water-soluble binder resin or the second water-soluble binder resin that constitute the reflective layer laminate are binder resins of the same kind, and it is more preferable that those resins are polyvinyl alcohol.

In regard to the reflective layer laminate according to the present invention, the thickness per layer of the high refractive index layer is preferably in the range of 20 to 800 nm, and more preferably in the range of 50 to 350 nm. Furthermore, the thickness per layer of the low refractive index layer is preferably in the range of 20 to 800 nm, and more preferably in the range of 50 to 350 nm.

Here, in a case in which the thickness of various layers per layer is measured, the high refractive index layer and the low refractive index layer may be configured to have a clear interface between these, or may be configured to have an interface that is gradually changing. In the case of a configuration in which the interface gradually changes, in a region in which the interfaces at which the various layers are contacted are mixed, and the refractive index changes continuously, in a case in which the maximum refractive index - minimum refractive index = $\Delta n$, the point of (minimum refractive index between two layers + $\Delta n/2$) is regarded as the layer interface.

According to the present invention, the metal oxide concentration profile in a reflective layer laminate formed by alternately laminating a high refractive index layer and a low refractive index layer can be determined by performing etching in the depth direction from the surface using a sputtering method, performing sputtering using an XPS surface analyzer at a rate of 0.5 nm/min while taking the outermost surface as 0 nm, and measuring the atomic composition ratio. Furthermore, the metal oxide concentration profile can also be determined by cutting the reflective layer laminate, and measuring the atomic composition ratio at the cut surface using an XPS surface analyzer. In the mixed region, in a case in which the concentration of metal oxide changes non-continuously, the boundaries can be checked by tomographic photographs taken by electron microscopy (TEM).

The XPS surface analyzer is not particularly limited, and any model can be used. For example, ESCALAB-200R manufactured by VG Scientific, Ltd. can be used. Measurement is made using Mg as the X-ray anode at an output power of 600 W (accelerating voltage 15 kV and emission current 40 mA).

In regard to the reflective layer laminate according to the present invention, from the viewpoint of productivity, a preferred total layer number of high refractive index layers and low refractive index layers is in the range of 6 to 100 layers, more preferably in the range of 8 to 40 layers, and even more preferably in the range of 9 to 30 layers.

In regard to the reflective layer laminate according to the present invention, it is preferable to design the difference between the refractive index of the high refractive index layer and the refractive index of the low refractive index layer to be large, from the viewpoint that the infrared reflectance can be made high with a small number of layers. According to the present invention, the difference in the refractive index layer between a high refractive index layer and a low refractive index layer that are adjacent to each other is preferably 0.1 or more, more preferably 0.3 or more, even more preferably 0.35 or more, and particularly preferably 0.4 or more. However, in regard to the outermost layer or the lowermost layer, a configuration other than the range of the difference in the refractive index defined above may also be adopted.

The reflectance of light in a particular wavelength region is determined by the difference in the refractive index of two adjacent layers and the number of laminated layers, and as the difference in the refractive index is larger, the same reflectance can be obtained with a smaller number of layers. This difference in the refractive index and the required number of layers can be calculated using a commercially available optical design software program. For example, in order to obtain a near-infrared reflectance of 90% or higher, if the difference in the refractive index is smaller than 0.1, lamination of 200 or more layers is needed. Thus, productivity is decreased, scattering at the lamination interface increases, transparency is decreased, and production without trouble is also made very difficult. From the viewpoint of increasing the reflectance and decreasing the number of layers, there is no upper limit in the difference in the refractive index; however, the difference in the refractive index is substantially about 1.4 at the maximum.

In regard to the reflective layer laminate according to the present invention, from the viewpoint of adhesiveness to a transparent substrate, a layer configuration in which the lowermost layer that is adjacent to the transparent substrate is a low refractive index layer is preferred. Furthermore, it is preferable that the layer adjacent to the optically functional layer according to the present invention is also a low refractive index layer containing silicon dioxide as the metal oxide particles in an amount in the range of 10% to 60% by mass.

Furthermore, according to the present invention, the first and second water-soluble binder resin included in the high refractive index layer or the low refractive index layer is preferably polyvinyl alcohol. It is also preferable that the degree of saponification of the polyvinyl alcohol included in the high refractive index layer is different from the degree of saponification of the polyvinyl alcohol included in the low refractive index layer. It is more preferable that the first metal oxide particles included in the high refractive index layer are titanium oxide particles, and even more preferably titanium oxide particles that have been surface-treated with a silicon-containing hydrated oxide. Furthermore, it is preferable to use silica (silicon dioxide) as the second metal oxide particles that are included in the low refractive index layer.

[High refractive index layer]

The high refractive index layer according to the present invention contains a first water-soluble binder resin and first metal oxide particles, and may also include a curing agent, another binder resin, a surfactant, and various additives as necessary.

The refractive index of the high refractive index layer according to the present invention is preferably 1.80 to 2.50, and more preferably 1.90 to 2.20.

(First water-soluble binder resin)

The first water-soluble binder resin according to the present invention means that when the water-soluble binder resin is dissolved in water at a concentration of 0.5% by mass at a temperature at which the binder resin dissolves best, the mass of insoluble matters that are separated by filtration when filtered through a G2 glass filter (maximum pore size 40 to 50 $\mu$m) is 50% by mass or less of the water-soluble binder resin that has been added.

The weight average molecular weight of the first water-soluble binder resin according to the present invention is preferably in the range of 1,000 to 200,000. The weight average molecular weight is more preferably in the range of 3,000 to 40,000.

The weight average molecular weight as used in the present invention can be measured by a known method, and for example, the weight average molecular weight can be measured by static light scattering, gel permeation chromatography (GPC), or time-of-flight mass spectrometry (TOF-MASS). In the present invention, values measured by gel permeation chromatography, which is a method that is generally widely used, are employed.

The content of the first water-soluble binder resin in the high refractive index layer is preferably in the range of 5% to 50% by mass, and more preferably in the range of 10% to 40% by mass, relative to 100% by mass of the solid content of the high refractive index layer.

The first water-soluble binder resin that is applied to the high refractive index layer is not particularly limited; however, the first water-soluble binder resin is particularly preferably polyvinyl alcohol. Furthermore, it is preferable that the water-soluble binder resin that is applied to the low refractive index layer is also polyvinyl alcohol.

In the following description, the polyvinyl alcohols that are applicable to the high refractive index layer and the low refractive index layer will be explained together.

<Polyvinyl alcohol>

According to the present invention, in regard to the high refractive index layer and the low refractive index layer, it is preferable that polyvinyl alcohols having different degrees of saponification are applied to the respective refractive index layers.

In the following description, in order to distinguish the polyvinyl alcohols that are applied to the respective refractive index layers, the polyvinyl alcohol used for the high refractive index layer is designated as polyvinyl alcohol (A), and the polyvinyl alcohol used for the low refractive index layer is designated as polyvinyl alcohol (B). In a case in which each of the refractive index layers contain multiple polyvinyl alcohols having different degrees of saponification or different degrees of polymerization, the polyvinyl alcohol present at the largest content in each refractive index layer is designated as polyvinyl alcohol (A) for the high refractive index layer, and as polyvinyl alcohol (B) for the low refractive index layer, respectively.

The "degree of saponification" as used in the present invention is the proportion of hydroxyl groups with respect to the total number of acetyloxy groups (derived from raw material vinyl acetate) and hydroxyl groups in the polyvinyl alcohol.

In regard to the term "polyvinyl alcohol present at the largest content in the refractive index layer" as used herein, polyvinyl alcohols having a difference in the degree of saponification of 3 mol% or less are considered to be the same polyvinyl alcohols, and the degree of polymerization is calculated. However, polyvinyl alcohols with low degrees of polymerization, each having a degree of polymerization of 1,000 or less, are regarded as different polyvinyl alcohols (even if there are polyvinyl alcohols having a difference in the degree of saponification of 3 mol% or less, they are not considered as the same polyvinyl alcohols). Specifically, in a case in which polyvinyl alcohols having a degree of saponification of 90 mol%, a degree of saponification of 91 mol%, and a degree of saponification of 93 mol%, respectively, are included in the same layer at proportions of 10% by mass, 40% by mass, and 50% by mass, respectively, these three polyvinyl alcohols are considered to be the same polyvinyl alcohols, and a mixture of these three is designated as polyvinyl alcohol (A) or (B). Furthermore, regarding the "polyvinyl alcohols having a difference in the degree of saponification of 3 mol% or less", when attention is paid to any one polyvinyl alcohol, a difference of 3 mol% or less is sufficient. For example, in a case in which polyvinyl alcohols having degrees of saponification of 90 mol%, 91 mol%, 92 mol%, and 94 mol%, respectively, are included, when attention is paid to the polyvinyl alcohol having a degree of saponification of 91 mol%, since the difference in the degree of polymerization with any of the polyvinyl alcohols is 3 mol% or less, the polyvinyl alcohols are considered to be the same polyvinyl alcohols.

In a case in which polyvinyl alcohols having a difference in the degrees of saponification of 3 mol% or more are included in the same layer, this is regarded as a mixture of different polyvinyl alcohols, and the respective degrees of polymerization and the respective degrees of saponification are calculated. For example, in a case in which PVA203 (degree of saponification = 87 mol% to 89 mol%) : 5% by mass, PVA117 (degree of saponification = 98 mol% to 99 mol%) : 25% by mass, PVA217 (degree of saponification = 87 mol% to 89 mol%) : 10% by mass, PVA220 (degree of saponification = 87 mol% to 89 mol%) : 10% by mass, PVA224 (degree of saponification = 87 mol% to 89 mol%) : 10% by mass, PVA235 (degree of saponification = 87 mol% to 89 mol%) : 20% by mass, and PVA245 (degree of saponification = 88 mol%): 20% by mass are included, the PVA (polyvinyl alcohol) present at the largest content is a mixture of PVA217 to 245 (since the difference in the degree of saponification in PVA217 to 245 is 3 mol% or less, they are the same polyvinyl alcohols), and this mixture is regarded as polyvinyl alcohol (A) or (B). Thus, in regard to the mixture of PVA217 to 245 (polyvinyl alcohol (A) or (B)), the degree of polymerization is $(1700 \times 0.1 + 2000 \times 0.1 + 2400 \times 0.1 + 3500 \times 0.2 + 4500 \times 0.7)/0.7 = 3200$, and the degree of saponification is 88 mol%.

The difference between the absolute values of the degrees of saponification of polyvinyl alcohol (A) and polyvinyl alcohol (B) is preferably 3 mol% or more, and more preferably 5 mol% or more. When the difference is in such a range, the interlayer mixing state between the high refractive index layer and the low refractive index layer is at a preferable level, which is preferable. Furthermore, it is more preferable if the difference in the degree of saponification between polyvinyl alcohol (A) and polyvinyl alcohol (B) is larger; however, from the viewpoint of solubility of polyvinyl alcohol in water, the difference is preferably 20 mol% or less.

Furthermore, the degrees of saponification of polyvinyl alcohol (A) and polyvinyl alcohol (B) are preferably 75 mol% or more from the viewpoint of solubility in water. Furthermore, it is preferable that the degree of saponification of any one of polyvinyl alcohol (A) and polyvinyl alcohol (B) is 90 mol% or more, and the degree of saponification of the other is 90 mol% or less, from the viewpoint that the interlayer mixing state between the high refractive index layer and the low refractive index layer can be maintained at a preferable level. It is more preferable that any one of polyvinyl (A) and polyvinyl alcohol (B) has a degree of saponification of 95 mol% or more, and the other has a degree of saponification of 90 mol% or less. Meanwhile, the upper limit of the degree of saponification of polyvinyl alcohol is not particularly limited; however, the upper limit is usually less than 100 mol%, and about 99.9 mol% or less.

Regarding the degrees of polymerization of two kinds of polyvinyl alcohols having different degrees of saponification, polyvinyl alcohols having degrees of polymerization of 1,000 or more are preferably used, and particularly, polyvinyl alcohols having degrees of polymerization in the range of 1, 500 to 5, 000 are more preferred, while polyvinyl alcohols having degrees of polymerization in the range of 2, 000 to 5, 000 are even more preferably used. When the degree of polymerization of a polyvinyl alcohol is 1,000 or more, cracking of the coating film does not occur, and when the degree of polymerization is 5,000 or less, it is preferable from the viewpoint that the physical properties of the coating liquid are stabilized. According to the present specification, when it is said that "physical properties of the coating liquid are stabilized, it is implied that the physical properties of the coating liquid, for example, viscosity of the coating liquid, are stabilized over time. When the degree of polymerization of at least one of polyvinyl alcohol (A) and polyvinyl alcohol (B) is in the range of 2,000 to 5,000, cracking of the film is reduced, and the reflectance for light having a particular wavelength is increased, which is preferable. When the degrees of polymerization of both polyvinyl alcohol (A) and polyvinyl alcohol (B) are 2,000 to 5,000, it is preferable from the viewpoint that the above-mentioned effect can be exhibited more noticeably.

The "degree of polymerization" as used in the present specification refers to a viscosity average degree of polymerization that is measured according to JIS K 6726 (1994), and this is the degree of polymerization P that is determined by the following formula (1) from the intrinsic viscosity $[\eta]$ (cm$^3$/g) measured in water at 30°C obtained after fully resaponifying a polyvinyl alcohol, and purifying the resultant.

$$\text{Formula (1)}$$

$$\text{Degree of polymerization P} = ([\eta] \times 10^3/8.29)^{(1/0.62)}$$

It is preferable that the polyvinyl alcohol (B) included in the low refractive index layer has a degree of saponification in the range of 75 mol% to 90 mol%, and a degree of polymerization in the range of 2,000 to 5,000. When a polyvinyl alcohol having such characteristics is incorporated into the low refractive index layer, it is preferable that the interfacial mixing is further suppressed. This is speculated to be because cracking of the film occurs to a reduced extent, and settability is enhanced.

Regarding the polyvinyl alcohols (A) and (B) used for the present invention, synthetic products may be used, or commercially available products may also be used. Examples of commercially available products that are used as the polyvinyl alcohols (A) and (B) include PVA-102, PVA-103, PVA-105, PVA-110, PVA-117, PVA-120, and PVA-124 (all degree of saponification = 98 mol% to 99 mol%), PVA-203, PVA-205, PVA-210, PVA-217, PVA-220, PVA-224, and PVA-235 (all degree of saponification = 87 mol% to 89 mol%) manufactured by Kuraray Co. , Ltd.; JC-25, JC-33 (all, degree of saponification = 99 mol% or more), JF-03, JF-04, JF-05 (all, degree of saponification = 98 mol% to 99 mol%), JP-03, JP-04 (all, degree of saponification = 86 mol% to 90 mol%), JP-05 (degree of saponification =87 mol% to 89 mol%), and JP-45 (degree of saponification =86. 5 mol% to 89. 5 mol%) manufactured by Japan Vam & Poval Co., Ltd.

The first water-soluble binder resin according to the present invention may include a modified polyvinyl alcohol that has been partially modified, in addition to the conventional polyvinyl alcohol obtainable by hydrolyzing polyvinyl acetate, to the extent that the effects of the present invention are not impaired. When such a modified polyvinyl alcohol is included, adhesiveness, water resistance and flexibility of the refractive index layer thus formed may be improved. Examples of such a modified polyvinyl alcohol include a cationically modified polyvinyl alcohol, an anionically modified polyvinyl alcohol, a nonionically modified polyvinyl alcohol, and a vinyl alcohol-based polymer.

Examples of the cationically modified polyvinyl alcohol include the polyvinyl alcohols described in JP 61-10483 A, which have primary to tertiary amino groups or a quaternary ammonium group in the main chain or a side chain of the polyvinyl alcohol, and are obtained by saponifying a copolymer of an ethylenically unsaturated monomer having a cationic group and vinyl acetate.

Examples of the ethylenically unsaturated monomer having a cationic group include trimethyl-(2-acrylamido-2,2-dimethylethyl)ammonium chloride, trimethyl-(3-acrylamido-3,3-dimethylpropyl)ammonium chloride, N-vinylimidazole, N-vinyl-2-methylimidazole, N-(3-dimethylaminopropyl)methacrylamide, hydroxyethyltrimethylammonium chloride, trimethyl-(2-methacrylamidopropyl)ammonium chloride, and N-(1,1-dimethyl-3-dimethylaminopropyl)acrylamide. The proportion of the cationic modifying group-containing monomer in the cationically modified polyvinyl alcohol is 0.1 mol% to 10 mol%, and preferably 0.2 mol% to 5 mol%, with respect to vinyl acetate.

Examples of the anionically modified polyvinyl alcohol include the polyvinyl alcohol having an anionic group described in JP 1-206088 A; the copolymer of vinyl alcohol and a vinyl compound having a water-soluble group as described in JP 61-237681 A and JP 63-307979 A; and the modified polyvinyl alcohol having a water-soluble group as described in JP 7-285265 A.

Furthermore, examples of the nonionically modified polyvinyl alcohol include the polyvinyl alcohol derivative obtained by adding a polyalkylene oxide group to a portion of vinyl alcohol as described in JP 7-9758 A; the block copolymer of a vinyl compound having a hydrophobic group and vinyl alcohol as described in JP 8-25795 A; a silanol-modified polyvinyl alcohol having a silanol group; and reactive group-modified polyvinyl alcohols having reactive groups such as an acetoacetyl group, a carbonyl group, and a carboxyl group.

Examples of the vinyl alcohol-based polymer include EXCEVAL (registered trademark, manufactured by Kuraray Co., Ltd.) and NICHIGO G-POLYMER (registered trademark, manufactured by Nippon Synthetic Chemical Industry Co., Ltd.).

Regarding the modified polyvinyl alcohols, two or more kinds thereof that are different in the degree of polymerization or the kind of modification can be used in combination.

The content of the modified polyvinyl alcohol is not particularly limited; however, the content is preferably in the range of 1% to 30% by mass with respect to the total mass (solid content) of the various refractive indices. When the content is in such a range, the above-described effects are manifested more effectively.

According to the present invention, it is preferable that, as described above, two kinds of polyvinyl alcohols having different degrees of saponification are respectively used in layers having different refractive indices.

For example, in a case in which polyvinyl alcohol (A) having a low degree of saponification is used in the high refractive index layer, and polyvinyl alcohol (B) having a high degree of saponification is used in the low refractive index layer, it is preferable that the polyvinyl alcohol (A) in the high refractive index layer is included in an amount in the range of 40% to 100% by mass, and more preferably in the range of 60% to 95% by mass, with respect to the total mass of all the polyvinyl alcohols in the layer; and the polyvinyl alcohol (B) in the low refractive index layer is included in an amount in the range of 40% to 100% by mass, and more preferably in the range of 60% to 95% by mass, with respect to the total mass of all the polyvinyl alcohols in the low refractive index layer. Also, in a case in which polyvinyl alcohol (A) having a high degree of saponification is used in the high refractive index layer, and polyvinyl alcohol (B) having a low degree of saponification is used in the low refractive index layer, it is preferable that the polyvinyl alcohol (A) in the high refractive index layer is included in an amount in the range of 40% to 100% by mass, and more preferably in the range of 60% to 95% by mass, with respect to the total mass of all the polyvinyl alcohols in the layer; and the polyvinyl alcohol (B) in the low refractive index layer is included in an amount in the range of 40% to 100% by mass, and more preferably in the range of 60% to 95% by mass, with respect to the total mass of all the polyvinyl alcohols in the low refractive index layer. When the content is 40% by mass or more, interlayer mixing is suppressed, and the effect of reducing disorder at the interface is manifested noticeably. On the other hand, when the content is 100% by mass or less, stability of the coating liquid is enhanced.

(Other binder resins)

According to the present invention, for the high refractive index layer, regarding the first water-soluble binder resin other than polyvinyl alcohol, as long as the high refractive index layer containing first metal oxide particles can form a film, any binder component can be used without limitations. Also, for the low refractive index layer that will be described below, regarding the second water-soluble binder resin other than polyvinyl alcohol (B), as long as the low refractive index layer containing second metal oxide particles can be form a film as described above, any binder resin can be used without limitations. However, when environmental problems and flexibility of film are taken into consideration, the water-soluble polymers such as gelatins, celluloses, polysaccharide thickeners, and polymers having reactive functional groups, which have been explained as water-based binder resins for the optically functional layer, are preferred.

In regard to the high refractive index layer, the content of the other binder resin to be used in combination with the polyvinyl alcohol that is preferably used as a water-soluble binder resin, can be adjusted in the range of 5% to 50% by mass relative to 100% by mass of the solid content of the high refractive index layer.

According to the present invention, from the viewpoint that it is not necessary to use an organic solvent, and it is preferable in view of environmental conservation, it is preferable that the binder resin is composed of water-soluble polymers. That is, according to the present invention, as long as the effects are not impaired, a water-soluble polymer other than polyvinyl alcohol and a modified polyvinyl alcohol may also be used as the binder resin, in addition to the polyvinyl alcohol and modified polyvinyl alcohol described above. A water-soluble polymer as used in the present invention implies that when the water-soluble polymer is dissolved in water at a concentration of 0.5% by mass at a temperature at which the water-soluble polymer dissolves best, the mass of insoluble matters (residue) that are separated by filtration when filtered through a G2 glass filter (maximum pore size 40 to 50 $\mu$m) is 50% by mass or less of the water-soluble polymer that has been added. Among such water-soluble polymers, particularly, gelatins, celluloses, polysaccharide thickeners, or polymers having reactive functional groups as described above are preferred. These water-soluble polymers may be used singly, or may be used as mixtures of two or more kinds thereof.

The details about the gelatins, celluloses, polysaccharide thickeners, and polymers having reactive functional groups, which are other binder resins, are the same as the details explained in connection with the water-based binder resin of the optically functional layer.

(First metal oxide particles)

According to the present invention, the first metal oxide particles that are applicable to the high refractive index layer are particularly metal oxide particles having a refractive index in the range of 2.0 to 3.0. More specifically, examples thereof include titanium oxide, zirconium oxide, zinc oxide, synthetic amorphous silica, colloidal silica, alumina, colloidal alumina, lead titanate, red lead, chrome yellow, zinc yellow, chromium oxide, ferric oxide, iron black, copper oxide, magnesium oxide, magnesium hydroxide, strontium titanate, yttrium oxide, niobium oxide, europium oxide, lanthanum oxide, zircon, and tin oxide. Furthermore, composite oxide particles composed of multiple metals, or core-shell particles in which the metal composition varies with the core-shell form, can also be used.

In order to form a high refractive index layer that is transparent and has a higher refractive index, it is preferable to incorporate fine oxide particles of a metal having a high refractive index, such as titanium or zirconium, specifically, fine titanium oxide particles or fine zirconium oxide particles. Among these, from the viewpoint of the stability of the coating liquid used to form the high refractive index layer, titanium oxide particles are more preferable. Furthermore, among titanium oxides, particularly rutile type (tetragonal system) is more preferred to anatase type, because the rutile type has lower catalytic activity, so that weather resistance of the high refractive index layer or adjacent layers is increased, and the refractive index is further increased.

Furthermore, in a case in which core-shell particles are used as the first metal oxide particles for the high refractive index layer, from the viewpoint that interlayer mixing between the high refractive index layer and adjacent layers is suppressed as a result of an interaction between the silicon-containing hydrated oxide of the shell layer and the first water-soluble binder resin, core-shell particles in which titanium oxide particles are coated with a silicon-containing hydrated oxide are even more preferred.

Regarding the aqueous solution containing titanium oxide particles that are used as the cores of the core-shell particles according to the present invention, it is preferable to use an aqueous solution which has a pH in the range of 1.0 to 3.0 as measured at 25°C, and in which the surface of a water-based titanium oxide sol containing titanium particles having a positive zeta potential value, has been hydrophobized to make the particles dispersible in an organic solvent.

When the content of the first metal oxide particles according to the present invention is in the range of 15% to 80% by mass relative to 100% by mass of the solid content of the high refractive index layer, it is preferable from the viewpoint of imparting a difference in the refractive index between the high refractive index layer and the low refractive index layer. Furthermore, the content of the first metal oxide particles is more preferably 20% to 77% by mass, and particularly preferably 30% to 75% by mass. Meanwhile, in a case in which metal oxide particles other than the core-shell particles are incorporated into the high refractive index layer, the content of the metal oxide particles is not particularly limited as long as the content is used to the extent that the effects of the present invention can be provided.

According to the present invention, the volume average particle size of the first metal oxide particles that are applicable to the high refractive index layer is preferably in the range of 1 to 30 nm, and more preferably in the range of 5 to 15 nm. When the volume average particle size is in the range of 1 to 30 nm, it is preferable from the viewpoint of having a low haze value and excellent visible light transmissibility.

Meanwhile, the volume average particle size of the first metal oxide particles according to the present invention is a volume-weighted average particle size represented by the formula: volume average particle size $mv = \{\sum(vi \cdot di)\}/\{\sum(vi)\}$, in the case in which, for a population of a particulate metal oxide including n1, n2, ..., ni, ... and nk particles having particle sizes of d1, d2, ..., di, ... and dk, respectively, the volume per particle is designated as vi, when the particle sizes of any arbitrary 1000 particles are measured by a method of observing the particles themselves using a laser diffraction scattering method, a dynamic light scattering method or electron microscopy, or by a method of observing particle images appearing in a cross-section or the surface of the refractive index layer using electron microscopy.

It is also preferable that the first metal oxide particles according to the present invention are monodisperse. The term monodisperse as used herein means that the monodispersibility that can be determined by the following formula (2) is 40% or less. This monodispersibility is more preferably 30% or less, and particularly preferably in the range of 0.1% to 20%.

```
                 Formula (2)

     Monodispersibility = (Standard deviation of particle

  size)/(average value of particle size) × 100 (%)
```

<Core-shell particles>

Regarding the first metal oxide particles that are applied to the high refractive index layer according to the present invention, it is preferable to use "titanium oxide particles that have been surface-treated with a silicon-containing hydrated oxide", and titanium oxide particles in such a form may be referred to as "core-shell particles" or "Si-coated $TiO_2$".

The core-shell particles according to the present invention are such that the titanium oxide particles that constitute the core part are coated with a silicon-containing hydrated oxide that constitutes the shell part. Preferably, the core-shell particles have a structure in which titanium oxide particles having an average particle size of the titanium oxide particles in the range of 1 to 30 nm, and more preferably in the range of 4 to 30 nm, are coated on the surface with a shell formed from a silicon-containing hydrated oxide such that the coating amount of the silicon-containing hydrated oxide is in the range of 3% to 30% by mass in terms of $SiO_2$ with respect to the total mass of the titanium oxide particles.

That is, according to the present invention, when core-shell particles are incorporated, there are provided an effect that interlayer mixing between the high refractive index layer and the low refractive index layer is suppressed as a result of an interaction between the silicon-containing hydrated oxide of the shell layer and the first water-soluble binder resin; and an effect that deterioration of the binder in the case of using titanium oxide as the core, caused by the photocatalytic activity of titanium oxide, and the problem of choking can be prevented. Choking is a phenomenon in which when the surface of a layer formed is touched with an index finger, powdery particles and the like attach to the finger.

According to the present invention, the core-shell particles are such that the coating amount of the silicon-containing hydrated oxide that forms the shell with respect to the titanium oxide that becomes the core is preferably in the range of 3% to 30% by mass, more preferably in the range of 3% to 10% by mass, and even more preferably in the range of 3% to 8% by mass, in terms of $SiO_2$, when the amount of titanium oxide is designated as 100% by mass. If the coating amount of the shell is 30% by mass or less, refractive index increase in the high refractive index layer can be achieved, and when the coating amount of the shell is 3% by mass or more, particles of the core-shell particles can be formed stably.

Furthermore, according to the present invention, the average particle size of the core-shell particles according to the present invention is preferably in the range of 1 to 30 nm, more preferably in the range of 5 to 20 nm, and even more preferably in the range of 5 to 15 nm. When the average particle size of the core-shell particles is in the range of 1 to 30 nm, the near-infrared reflectance, or optical characteristics such as transparency and haze can be further enhanced.

The average particle size as used in the present invention refers to the primary average particle size, and can be measured from electron microscopic photographs of the core-shell particles obtained by transmission electron microscope (TEM) or the like. Furthermore, the average particle size may also be measured using a particle size distribution meter that utilizes a dynamic light scattering method or a static light scattering method.

Furthermore, in a case in which the average particle size of the core-shell particles is determined through electron microscopy, the average particle size of the primary particles can be determined by observing the particles themselves, or the core-shell particles appearing in a cross-section or the surface of a refractive index layer using an electron microscope, measuring the particle sizes of any 1,000 arbitrary particles, and calculating the simple average value (number average) thereof. Here, the particle size of an individual particle is represented by the diameter of an imaginary circle that is assumed to have the same area as the projected area of the particle.

Regarding the method for producing core-shell particles that can be applied to the present invention, any known production method can be employed. For example, reference can be made to the production methods described in JP 10-158015 A, JP 2000-053421 A, JP 2000-063119 A, JP 2000-204301 A, and JP 4550753 B.

According to the present invention, the silicon-containing hydrated oxide to be applied to the core-shell particles may be any one of a hydrate of an inorganic silicon compound, a hydrolysate of an organic silicon compound, or a condensate thereof, and according to the present invention, a compound having a silanol group is preferred.

In regard to the high refractive index layer according to the present invention, in a case in which core-shell particles are applied as the first metal oxide particles, other metal oxide particles may also be included in addition to the core-shell particles. In a case in which other metal oxide particles are used in combination, various ionic dispersants or protective agents can be used so as to prevent the core-shell particles explained above from aggregating due to electric charge. Examples of the metal oxide particles that can be used in addition to the core-shell particles include titanium dioxide, zirconium oxide, zinc oxide, synthetic amorphous silica, colloidal silica, alumina, colloidal alumina, lead titanate, red lead, chrome yellow, zinc yellow, chromium oxide, ferric oxide, iron black, copper oxide, magnesium oxide, magnesium hydroxide, strontium titanate, yttrium oxide, niobium oxide, europium oxide, lanthanum oxide, zircon, and tin oxide.

The core-shell particles according to the present invention may be such that the entire surface of titanium oxide particles as the core is coated with a silicon-containing hydrated oxide, or may be such that the surface of titanium oxide particles as the core is partially coated with a silicon-containing hydrated oxide.

(Curing agent)

According to the present invention, a curing agent may also be used in order to cure the first water-soluble binder resin that is applied to the high refractive index layer.

The curing agent that can be used together with the first water-soluble binder resin is not particularly limited, as long as the curing agent is capable of causing a curing reaction with the water-soluble binder resin. For example, in the case of using polyvinyl alcohol as the first water-soluble binder resin, boric acid and salts thereof are preferable as the curing agent. In addition to boric acid and salts thereof, known curing agents can be used, and generally, a compound having a group that can react with polyvinyl alcohol, or a compound that accelerates a reaction between different groups that are carried by polyvinyl alcohol can be appropriately selected and used.

Examples of the curing agent that can be applied to the present invention include epoxy-based curing agents (for example, diglycidyl ethyl ether, ethylene glycol diglycidyl ether, 1,4-butanediol diglycidyl ether, 1,6-diglycidyl cyclohexane, N,N-diglycidyl-4-glycidyloxyaniline, sorbitol polyglycidyl ether, and glycerol polyglycidyl ether), aldehyde-based curing agents (for example, formaldehyde and glyoxal), active halogen-based curing agents (for example, 2,4-dichloro-4-hydroxy-1,3,5-s-triazine), active vinyl-based compounds (for example, 1,3,5-trisacryloylhexahydro-s-triazine and bisvinylsulfonyl methyl ether), and aluminum alum.

Boric acid and salts thereof refer to an oxyacid having a boron atom as a central atom, and salts thereof. Specific examples include ortho-boric acid, diboric acid, metaboric acid, tetraboric acid, pentaboric acid, and octaboric acid, as well as salts thereof.

Boric acids having boron atoms and salts thereof as the curing agent may be used singly, or two or more kinds thereof may also be used as mixtures. Particularly preferred is a mixed aqueous solution of boric acid and borax.

Boric acid and borax can be produced only as relatively dilute aqueous solutions when used respectively alone; however, by mixing the two, a concentrated aqueous solution can be produced, and thus concentration of the coating liquid is enabled. Also, there is an advantage that the pH of the aqueous solution to be added can be controlled relatively freely.

According to the present invention, it is preferable to use boric acid and a salt thereof, or borax as the curing agent, from the viewpoint that the purpose and effects of the present invention can be obtained more reliably. In a case in which boric acid and a salt thereof, or borax is used, it is speculated that the metal oxide particles and hydroxyl groups of polyvinyl alcohol as the water-soluble binder resin can form a hydrogen-bonded network more easily, and as a result, interlayer mixing between the high refractive index layer and the low refractive index layer is suppressed, so that preferable near-infrared shielding characteristics are attained. Particularly, when a setting-based application process by which simultaneous multilayer application of multiple layers of a high refractive index layer and a low refractive index layer is carried out using a wet type coater, subsequently the film surface temperature of the film thus formed is cooled to about 15°C, and then the film surface is dried, is used, the above-described effects can be manifested more preferably.

The content of the curing agent in the high refractive index layer is preferably in the range of 1% to 10% by mass, and more preferably in the range of 2% to 6% by mass, relative to 100% by mass of the solid content of the high refractive index layer.

Particularly, the total amount of use of the curing agent in the case of using polyvinyl alcohol as the first water-soluble binder resin is preferably in the range of 1 to 600 mg per gram of polyvinyl alcohol, and more preferably in the range of 100 to 600 mg per gram of polyvinyl alcohol.

[Low refractive index layer]

The low refractive index layer according to the present invention contains a second water-soluble binder resin and second metal oxide particles, and may further include various additives such as a curing agent, a surface coating component, a particle surface protective agent, a binder resin, and a surfactant.

The refractive index of the low refractive index layer according to the present invention is preferably in the range of 1.10 to 1. 60, and more preferably 1. 30 to 1. 50, at 23°C and 55%RH.

(Second water-soluble binder resin)

As the second water-soluble binder resin that is applied to the low refractive index layer according to the present invention, polyvinyl alcohol is preferably used. Furthermore, it is more preferable to use a polyvinyl alcohol (B) having a degree of saponification different from the degree of saponification of the polyvinyl alcohol (A) that is applied to the high refractive index layer, in the low refractive index layer according to the present invention. Meanwhile, regarding the explanation on a preferred weight average molecular weight and the like of the second water-soluble binder resin, since the water-soluble binder resin of the high refractive index layer has been explained in detail, explanation on the second water-soluble binder resin will not be given here.

The content of the second water-soluble binder resin in the low refractive index layer is preferably in the range of 20% to 99.9% by mass, and more preferably in the range of 25% to 80% by mass, relative to 100% by mass of the solid content of the low refractive index layer.

Regarding a water-soluble binder resin other than polyvinyl alcohol, which can be applied to the low refractive index layer according to the present invention, any water-soluble resin can be used without limitations as long as the low refractive index layer containing second metal oxide particles can form a film. However, when environmental problems or flexibility of the film is taken into consideration, a water-soluble polymer (particularly, gelatin, a polysaccharide thickener, or a polymer having a reactive functional group) is preferred. These water-soluble polymers may be used singly, or two or more kinds thereof may be used as mixtures.

Regarding the content of the other binder resin that is used in combination with the polyvinyl alcohol that is preferably used as the second water-soluble binder resin for the low refractive index layer, the other binder resin may also be used in an amount in the range of 0% to 10% by mass relative to 100% by mass of the solid content of the low refractive index layer.

It is a preferable embodiment that the low refractive index layer of the reflective layer laminate according to the present invention contains water-soluble polymers such as a cellulose, a polysaccharide thickener, and a polymer having a reactive functional group. However, since these water-soluble polymers are the same as those used as the water-soluble polymers explained above in connection with the high refractive index layer, further description will not be given here.

(Second metal oxide particles)

Regarding the second metal oxide particles to be applied to the low refractive index layer according to the present invention, it is preferable to use silica (silicon dioxide), and specific examples thereof include synthetic amorphous silica and colloidal silica. Among these, it is more preferable to use an acidic colloidal silica sol, and it is even more preferable to use a colloidal silica sol dispersed in an organic solvent. In order to further decrease the refractive index, hollow fine particles having a cavity inside the particle can be used as the second metal oxide particles to be applied to the low refractive index layer, and hollow fine particles of silica (silicon dioxide) are particularly preferred.

The second metal oxide particles (preferably, silicon dioxide) that are applied to the low refractive index layer have in general an average particle size in the range of 3 to 100 nm. The average particle size of primary particles (particle size in the state of dispersion liquid before being applied) of silicon dioxide dispersed in the state of primary particles is more preferably in the range of 3 to 50 nm, even more preferably in the range of 3 to 40 nm, particularly preferably in the range of 3 to 20 nm, and most preferably in the range of 4 to 10 nm. Furthermore, it is preferable that the average particle size of secondary particles of the second metal oxide particles is in the range of 2 to 3 times the average particle size of the primary particles described above, from the viewpoint that the haze value or the like can be set at a low level.

The average particle size of the metal oxide particles to be applied to the low refractive index layer can be determined by observing the particles themselves or particles appearing in a cross-section or the surface of the refractive index layer, measuring the particle sizes of 1,000 arbitrarily selected particles, and calculating the simple average value (number average) thereof. Here, the particle size of an individual particle is represented by the diameter of an imaginary circle that is assumed to have the same area as the projected area of the particle.

The colloidal silica that may be used for the present invention is obtainable by heating and aging a silica sol that is obtained by subjecting sodium silicate to metathesis using an acid or the like, or by passing sodium silicate through an ion exchange resin layer, and examples of colloidal silica include those described in JP 57-14091 A, JP 60-219083 A, JP 60-219084 A, JP 61-20792 A, JP 61-188183 A, JP 63-17807 A, JP 4-93284 A, JP 5-278324 A, JP 6-92011 A, JP 6-183134 A, JP 6-297830 A, JP 7-81214 A, JP 7-101142 A, JP 7-179029 A, JP 7-137431 A, and WO 1994/26530 A.

Regarding such colloidal silica, a synthesized product may be used, or a commercially available product may also be used. The colloidal silica may have its surface cationically modified, or may have its surface treated with Al, Ca, Mg, Ba or the like.

Regarding the second metal oxide particles that are applicable to the low refractive index layer, hollow particles can also be used. In the case of using hollow particles, the average particle cavity diameter is preferably in the range of 3 to 70 nm, more preferably in the range of 5 to 50 nm, and even more preferably in the range of 5 to 45 nm. Meanwhile, the average particle cavity diameter of hollow particles is the average value of the internal diameters of the hollow particles. According to the present invention, when the average particle cavity diameter of the hollow particles is in the range described above, the refractive index of the low refractive index layer is sufficiently lowered. The average particle cavity diameter is obtained by observing 50 or more randomly selected cavity diameters that can be observed as a circular shape, an elliptical shape, or a substantially circular or elliptical shape by electron microscopic observation, determining the cavity diameters of the various particles, and determining the number average value of the cavity diameters. Meanwhile, the average particle cavity diameter means the minimum distance among the distances measured between any two parallel lines tangent to the outer periphery of a cavity diameter that can be observed as a circular shape, an elliptical shape, or a substantially circular or elliptical shape.

The second metal oxide particles according to the present invention may have the surfaces coated with a surface coating component. Particularly, when metal oxide particles that are not core-shell particles are used as the first metal oxide particles according to the present invention, if the surface of the second metal oxide particles is coated with a surface coating component such as polyaluminum chloride, the second metal oxide particles do not easily aggregate with the first metal oxide particles.

The content of the second metal oxide particles in the low refractive index layer is preferably in the range of 0.1% to 70% by mass, more preferably in the range of 30% to 70% by mass, and even more preferably in the range of 45% to 65% by mass, relative to 100% by mass of the solid content of the low refractive index layer.

(Curing agent)

The low refractive index layer according to the present invention may include a curing agent, similarly to the high refractive index layer. The curing agent is not particularly limited as long as the curing agent can undergo a curing reaction with the second water-soluble binder resin included in the low refractive index layer. Particularly, the curing agent in the case of using polyvinyl alcohol as the second water-soluble binder resin to be applied to the low refractive index layer is preferably boric acid and salts thereof, or borax. Furthermore, in addition to boric acid and salts thereof, known curing agents can be used.

The content of the curing agent in the low refractive index is preferably in the range of 1% to 10% by mass, and more preferably in the range of 2% to 6% by mass, relative to 100% by mass of the solid content of the low refractive index layer.

Particularly, the total amount of use of the curing agent in the case of using polyvinyl alcohol as the second water-soluble binder resin is preferably in the range of 1 to 600 mg per gram of polyvinyl alcohol, and more preferably in the range of 100 to 600 mg per gram of polyvinyl alcohol.

Regarding specific examples of the curing agent that is applicable to the formation of the low refractive index layer, compounds similar to the curing agents mentioned above as examples for the high refractive index layer may be used, and further explanation will not be provided here.

[Other additives for various refractive index layers]

In the high refractive index layer and the low refractive index layer according to the present invention, various additives can be used as necessary. The content of the additives in the high refractive index layer and the low refractive index layer is preferably in the range of 0% to 20% by mass relative to 100% by mass of the solid content of the high refractive index layer and the low refractive index layer. Representative additives that are applicable to the present invention will be described below.

(Surfactant)

According to the present invention, at least one layer of the high refractive index layer and the low refractive index layer may further contain a surfactant. Regarding the surfactant, any kind among zwitterionic surfactants, cationic surfactants, anionic surfactants, and nonionic surfactants may be used. More preferred examples include betaine-based zwitterionic surfactants, quaternary ammonium salt-based cationic surfactant, dialkyl sulfosuccinate-based anionic surfactants, acetylene glycol-based nonionic surfactants, and fluorine-based cationic surfactants.

According to the present invention, the amount of addition of the surfactant is preferably in the range of 0.005% to 0.30% by mass, and more preferably in the range of 0.01% to 0.10% by mass, when the total mass of the coating liquid for a high refractive index layer or the coating liquid for a low refractive index layer is designated as 100% by mass.

(Amino acid)

According to the present invention, the high refractive index layer or the low refractive index layer may contain an amino acid having an isoelectric point of 6.5 or lower. By including the amino acid, dispersibility of the metal oxide particles in the high refractive index layer or the low refractive index layer can be enhanced.

Here, an amino acid is a compound having an amino group and a carboxyl group in the same molecule, and any type of amino acid among $\alpha$-type, $\beta$-type, $\gamma$-type and the like may be used. Some amino acids have optical isomers; however, according to the present invention, there is no difference in the effect caused optical isomerism, and any isomer may be used alone, or as a racemate.

Regarding detailed explanation on amino acids, reference can be made to the description of Kagaku Daijiten (Encyclopedia of Chemistry) (1st Compact Edition) (Kyoritsu Shuppan Co., Ltd.; published in 1960), pages 268-270.

Specifically preferred examples of the amino acid include aspartic acid, glutamic acid, glycine and serine, and glycine and serine are particularly preferred.

In regard to the isoelectric point of an amino acid, an amino acid has a region in which a balance between positive charges and negative charges in the molecule is achieved at a particular pH, and the overall change becomes zero, and the isoelectric point refers to this pH value. The isoelectric points of various amino acids can be determined by isoelectric point electrophoresis at a low ionic strength.

(Emulsion resin)

The high refractive index layer or the low refractive index layer according to the present invention may further contain an emulsion resin. When an emulsion resin is included, flexibility of the film is increased, and processability at the time of attachment to glass is enhanced.

The emulsion resin as used in the present invention is a resin dispersion liquid in which, for example, resin particles having an average particle size of about 0.01 to 2.0 μm are dispersed in a water-based medium in an emulsion state, and the emulsion resin is obtained by emulsion polymerizing an oil-soluble monomer using a polymeric dispersant having a hydroxyl group. Any basic difference in the polymer components of the emulsion resin thus obtainable, which may be caused by the kind of the dispersant to be used, is not observed. Examples of the dispersant to be used at the time of polymerization of the emulsion include low molecular weight dispersants such as an alkylsulfonic acid salt, an alkyl benzenesulfonic acid salt, diethylamine, ethylenediamine, and a quaternary ammonium salt; and polymeric dispersants such as polyoxyethylene nonyl phenyl ether, polyoxyethylene lauric acid ether, hydroxyethyl cellulose, and polyvinylpyrrolidone. It is speculated that when emulsion polymerization is performed using a polymeric dispersant having hydroxyl groups, hydroxyl groups exist at least on the surface of fine particles, and the resulting emulsion resin has chemical and physical properties of emulsion that are different from those of emulsion resins that have been polymerized using other dispersants.

A polymeric dispersant having hydroxyl groups is a polymeric dispersant having a weight average molecular weight of 10,000 or more and having hydroxyl groups substituted at side chains or terminals. Examples thereof include acrylic polymers such as polysodium acrylate and polyacrylamide, copolymerized with 2-ethylhexyl acrylate; and polyethers such as polyethylene glycol and polypropylene glycol.

(Lithium compound)

According to the present invention, at least one layer of the high refractive index layer and the low refractive index layer may further contain a lithium compound. In the coating liquid for a high refractive index layer or the coating liquid for a low refractive index layer, each containing a lithium compound, viscosity control of the coating liquid becomes easier, and as a result, production stability at the time of attaching the optical film of the present invention to glass is further enhanced.

The lithium compound that is applicable to the present invention is not particularly limited, and examples thereof include lithium carbonate, lithium sulfate, lithium nitrate, lithium acetate, lithium orotate, lithium citrate, lithium molybdate, lithium chloride, lithium hydride, lithium hydroxide, lithium bromide, lithium fluoride, lithium iodide, lithium stearate, lithium phosphate, lithium hexafluorophosphate, lithium aluminum hydride, lithium hydride triethylborate, lithium triethoxyaluminum hydride, lithium tantalate, lithium hypochlorite, lithium oxide, lithium carbide, lithium nitride, lithium niobate, lithium sulfide, lithium borate, $LiBF_4$, $LiClO_4$, $LiPF_4$, and $LiCF_3SO_3$. These lithium compounds may be used singly, or in combination of two or more kinds thereof.

Among these, lithium hydroxide is preferred from the viewpoint that the effects of the present invention can be sufficiently exhibited.

The amount of addition of the lithium compound is preferably in the range of 0.005 to 0.05 g, and more preferably 0.01 to 0.03 g, per gram of the metal oxide particles existing in each refractive index layer.

(Other additives)

Additives other than those explained above, which are applicable to the high refractive index layer and the low refractive index layer according to the present invention, will be listed below. Examples include various known additives, such as the ultraviolet absorbers described in JP 57-74193 A, JP 57-87988 A, and JP 62-261476 A; the discoloration inhibitors described in JP 57-74192 A, JP 57-87989 A, JP 60-72785 A, JP 61-146591 A, JP 1-95091 A, and JP 3-13376 A; various anionic, cationic or nonionic surfactants; the fluorescent brightening agents described in JP 59-42993 A, JP 59-52689 A, JP 62-280069 A, JP 61-242871 A, and JP 4-219266 A; pH adjusting agents such as sulfuric acid, phosphoric acid, acetic acid, citric acid, sodium hydroxide, potassium hydroxide, and potassium carbonate; antifoaming agents; lubricating agents such as diethylene glycol; antiseptic agents, antifungal agents, antistatic agents, matting agents, thermal stabilizers, oxidation inhibitors, flame retardants, crystal nucleating agents, inorganic particles, organic particles, thinning agents, lubricating agents, infrared absorbers, colorants, and pigments.

[Method for forming reflective laminate]

In regard to the method for forming a reflective layer laminate according to the present invention, it is preferable to form a reflective layer laminate by applying a wet coating method, and a production method including a step of wet coating, on a transparent substrate, a coating liquid for a high refractive index layer containing a first water-soluble binder resin and a first metal oxide particles, and a coating liquid for a low refractive index layer containing a second water-soluble binder resin and second metal oxide particles while performing lamination.

Furthermore, in regard to the method for manufacturing an optical film of the present invention, it is a preferable embodiment to produce an optical film by applying the optically functional film and the near-infrared shielding layer according to the present invention by simultaneously multilayer application by a wet coating method.

The wet coating method is not particularly limited, and examples include a roll coating method, a rod bar coating method, an air knife coating method, a spray coating method, a slide type curtain coating method, the slide hopper coating method described in US 2761419 B and US 2761791 B, and an extrusion coating method.

<<Applications of optical film>>

The optical film of the present invention can constitute a laminated glass by sandwiching the optical film between a pair of glass constituent members, and this laminated glass can be used for automobiles, railway vehicles, aircrafts, ships, constructions, and the like. A laminated glass can also be used for applications other than these. The laminated glass is preferably a laminated glass for construction or for vehicles. The laminated glass can be used for a windshield, a side glass, a rear glass, or a roof glass for automotive use.

Glass members include inorganic glasses and organic glasses (resin glazing). Examples of the inorganic glasses include float plate glasses, heat ray absorbing plate glasses, polished plate glasses, figured glasses, wire net-reinforced plate glasses, wired plate glasses, and colored glasses such as green glasses. The organic glasses are synthetic resin glasses used in replacement of inorganic glasses. Examples of the organic glasses (resin glazing) include polycarbonate plates and poly(meth)acrylic resin plates. Examples of the poly(meth)acrylic resin plates include polymethyl (meth)acrylate plates. According to the present invention, from the viewpoint of safety on the occasion in which the glass is broken by an externally applied impact, the glass member is preferably an inorganic glass.

Examples

Hereinafter, the present invention will be specifically described by way of Examples; however, the present invention is not intended to be limited to these. Meanwhile, descriptions such as "parts" and "percent (%)" are used in the Examples, and unless particularly stated otherwise, these represent "parts by mass" and "percent (%) by mass".

<<Production of optical film>>

[Production of optical film 101]

(Preparation of vanadium dioxide-containing fine particle dispersion liquid 1: with particle drying step)

10 mL of pure water was mixed with 0.433 g of ammonium vanadate ($NH_4VO_3$, manufactured by Wako Pure Chemical Industries, Ltd., special grade), and a 5 mass% aqueous solution of hydrazine hydrate ($N_2H_4 \cdot H_2O$, manufactured by Wako Pure Chemical Industries, Ltd., special grade) was slowly added dropwise thereto. Thus, a solution 1 having a pH value of 9.2 as measured at 23°C and 55%RH was produced. The solution 1 thus produced was introduced into a commercially available autoclave for a hydrothermal reaction treatment (HU-25 type manufactured by San-Ai Kagaku Co. , Ltd. ; configured to include a main body made of SUS and an inner cylinder made of TEFLON (registered trademark) having a capacity of 25 ml), and the solution 1 was subjected to a hydrothermal reaction treatment for 8 hours at 100°C and subsequently for 24 hours at 270°C.

Next, the reaction product thus obtained was filtered, and the filtration residue was subjected to filtration and washing with water and ethanol. Furthermore, this reaction product was dried for 10 hours at 60°C using a constant temperature dryer, and thus a powder of vanadium dioxide-containing fine particles was obtained.

Next, the powder of vanadium dioxide-containing fine particles thus obtained was added to pure water to obtain a concentration of 3.0% by mass, and a mixed liquid was prepared. The mixed liquid was subjected to an ultrasonic dispersion treatment for 5 minutes using an ultrasonic dispersing machine (UH-300 manufactured by SMT Co., Ltd.) to redisperse the fine particles. Thus, a vanadium dioxide-containing fine particle dispersion liquid 1 was produced.

(Preparation of coating liquid for forming optically functional layer 1)

The various constituent materials described below were sequentially added, mixed and dissolved, and thus a water-based coating liquid for forming an optically functional layer 1 was prepared.

| | |
|---|---|
| 3 mass% vanadium dioxide-containing fine particle dispersion liquid 1 | 28 parts by mass |
| 3 mass% aqueous solution of boric acid | 10 parts by mass |

(continued)

| | |
|---|---|
| 5 mass% polyvinyl alcohol (5 mass% aqueous solution, PVA-124; degree of polymerization: 2,400, degree of saponification: 98 to 99 mol%, manufactured by Kuraray Co., Ltd.) | 60 parts by mass |
| 5 mass% aqueous solution of surfactant (SOFTAZOLINE LSB-R, manufactured by Kawaken Fine Chemicals Co., Ltd.) | 2 parts by mass |

Meanwhile, polyvinyl alcohol PVA-124 is a polymer having a proportion of a hydroxyl group-containing repeating unit of 50 mol% or more.

(Formation of optically functional layer (layer A))

On a transparent substrate of a polyethylene terephthalate film (A4300 manufactured by Toyobo Co., Ltd., double-sided easily adhesive layer, abbreviated to PET in Table 1) having a thickness of 50 $\mu$m, the coating liquid for forming an optically functional layer 1 prepared as described above was applied by wet coating using an extrusion coater under the conditions that the layer thickness after drying would be 1.5 $\mu$m. Subsequently, the coating liquid was dried by blowing hot air at 110°C for 2 minutes, and thereby an optically functional layer (layer A) was formed. Thus, an optical film 101 was produced.

[Production of optical film 102]

(Preparation of vanadium dioxide-containing fine particle dispersion liquid 2: without particle drying step)

0.433 g of ammonium vanadate ($NH_4VO_3$, manufactured b Wako Pure Chemical Industries, Ltd., special grade) was mixed with 10 mL of pure water, and a 5 mass% aqueous solution of hydrazine hydrate ($N_2H_4 \cdot H_2O$, manufactured by Wako Pure Chemical Industries, Ltd., special grade) was slowly added dropwise thereto. Thus, a solution 1 having a pH value of 9.2 at 23°C and 55%RH was prepared. The solution 1 thus prepared was introduced into a commercially available autoclave for a hydrothermal reaction treatment (HU-25 type manufactured by San-Ai Kagaku Co., Ltd.; configured to include a main body made of SUS and an inner cylinder made of TEFLON (registered trademark) having a capacity of 25 ml), and the solution 1 was subjected to a hydrothermal reaction treatment for 8 hours at 100°C and subsequently for 24 hours at 270°C. Thus, a vanadium dioxide-containing fine particle dispersion liquid 2 in which vanadium dioxide-containing fine particles were dispersed at a concentration of 3.0% by mass, was prepared.

(Preparation of coating liquid for forming optically functional layer 2)

The various constituent materials described below were sequentially added, mixed and dissolved, and thus a water-based coating liquid for forming an optically functional layer 2 was prepared.

| | |
|---|---|
| 3 mass% vanadium dioxide-containing fine particle dispersion liquid 2 | 28 parts by mass |
| 3 mass% aqueous solution of boric acid | 10 parts by mass |
| 5 mass% polyvinyl alcohol (5 mass% aqueous solution, PVA-124; degree of polymerization: 2,400, degree of saponification: 98 to 99 mol%, manufactured by Kuraray Co., Ltd.) | 60 parts by mass |
| 5 mass% aqueous solution of surfactant (SOFTAZOLINE LSB-R, manufactured by Kawaken Fine Chemicals Co., Ltd.) | 2 parts by mass |

(Formation of optically functional layer)

On a transparent substrate of a polyethylene terephthalate film (A4300 manufactured by Toyobo Co., Ltd., double-sided easily adhesive layer, abbreviation PET) having a thickness of 50 $\mu$m, the coating liquid for forming an optically functional layer 2 prepared as described above was applied by wet coating using an extrusion coater under the conditions that the layer thickness after drying would be 1.5 $\mu$m. Subsequently, the coating liquid was dried by blowing hot air at 110°C for 2 minutes, and thereby an optically functional layer (layer A) was formed. Thus, an optical film 102 was produced.

[Production of optical film 103]

An optical film 103 was produced in the same manner as in the production of the optical film 102, except that an optically functional layer (layer A) was formed using a coating liquid for forming an optically functional layer 3, which had been produced by changing the polyvinyl alcohol (PVA-124) as the water-based binder resin used for producing the coating liquid for forming an optically functional layer 2, to an equal amount of polyvinylpyrrolidone (abbreviation: PVP, manufactured by Nippon Shokubai Co., Ltd., K-85, K value = 85).

Polyvinylpyrrolidone K-85 is a polymer having a proportion of a hydroxyl group-containing repeating unit of less than 50 mol%.

[Production of optical film 104]

An optical film 104 was produced in the same manner as in the production of the optical film 102, except that an optically functional layer (layer A) was formed using a coating liquid for forming an optically functional layer 4, which had been produced by changing the polyvinyl alcohol (PVA-124) as the water-based binder resin used for producing the coating liquid for forming an optically functional layer 2, to an equal amount of a copolymer polymer having 45 mol% of hydroxyethyl acrylate (abbreviation: HEA) and 55 mol% of acrylamide (abbreviation: AAm), and further changing the solvent for the various additives from water to a water-based mixed solvent of $H_2O$/isopropyl alcohol (abbreviation: IPA) = 7/3 (mass ratio).

[Production of optical film 105]

An optical film 105 was produced in the same manner as in the production of the optical film 102, except that an optically functional layer (layer A) was formed using a coating liquid for forming an optically functional layer 5, which had been produced by changing the polyvinyl alcohol (PVA-124) as the water-based binder resin used for producing the coating liquid for forming an optically functional layer 2, to an equal amount of polyhydroxyethyl acrylate (abbreviation: PHEA).

[Production of optical film 106]

An optical film 106 was produced in the same manner as in the production of the optical film 102, except that a coating liquid for forming an optically functional layer 6 was produced using a vanadium dioxide-containing fine particle dispersion liquid 3, which had been produced by subjecting the vanadium dioxide-containing fine particle dispersion liquid 2 used for the production of the coating liquid for forming an optically functional layer 2, to an ultrafiltration treatment according to the method described below, and an optically functional layer (layer A) was formed using this coating liquid.

(Ultrafiltration treatment for vanadium dioxide-containing fine particle dispersion liquid 3)

The vanadium dioxide-containing fine particle dispersion liquid 2 produced as described above was subjected to a concentrating operation, while being maintained at 20°C, using an ultrafiltration apparatus (PELLICON 2 cassette manufactured by Nihon Millipore K.K.) which has a filtering filter made of polyether sulfone and having a molecular weight cut-off of 300,000, and is connected in the mode of circulating in the system. Thus, the vanadium dioxide-containing fine particle dispersion liquid 2 was concentrated to a volume equivalent to 10% of the initial volume of the dispersion liquid, and then water was added thereto to make up 100%. This operation of concentration and dilution was repeated three times, and thereby an ultrafiltration-treated vanadium dioxide-containing fine particle dispersion liquid 3 having a particle concentration of 3% by mass was produced.

[Production of optical film 107]

An optical film 107 was produced in the same manner as in the production of the optical film 106, except that a coating liquid for forming an optically functional layer 7 was produced using a vanadium dioxide-containing fine particle dispersion liquid 4, which had been produced by incorporating polyvinyl alcohol (PVA-103) at the time of growth of the vanadium dioxide-containing fine particles according to the method described below and coating the particle surface with PVA, instead of the vanadium dioxide-containing fine particle dispersion liquid 3 used for the production of the coating liquid for forming an optically functional layer 6, and an optically functional layer (layer A) was formed using the coating liquid.

(Production of vanadium dioxide-containing fine particle dispersion liquid 4)

0.433 g of ammonium vanadate ($NH_4VO_3$, manufactured b Wako Pure Chemical Industries, Ltd., special grade) was mixed with 10 mL of pure water, and a 5 mass% aqueous solution of hydrazine hydrate ($N_2H_4 \cdot H_2O$, manufactured

by Wako Pure Chemical Industries, Ltd., special grade) was slowly added dropwise thereto. Thus, a solution 1 having a pH value of 9.2 was prepared. 0.54 g of a 5 mass% aqueous solution of polyvinyl alcohol (PVA-103) was added to the solution 1 thus prepared, and this solution was introduced into a commercially available autoclave for a hydrothermal reaction treatment (HU-25 type manufactured by San-Ai Kagaku Co. , Ltd. ; configured to include a main body made of SUS and an inner cylinder made of TEFLON (registered trademark) having a capacity of 25 ml). The solution was subjected to a hydrothermal reaction for 8 hours at 100°C and then for 24 hours at 270°C, and thus a vanadium dioxide-containing fine particle dispersion liquid 4 in which vanadium dioxide-containing fine particles having the surface coated with PVA-103 were dispersed at a concentration of 3.0% by mass was produced.

[Production of optical film 108]

An optical film 108 was produced in the same manner as in the production of the optical film 102, except that a coating liquid for forming an optically functional layer 8 was produced by changing the polyvinyl alcohol (PVA-124) as the water-based binder resin used to produce the coating liquid for forming an optically functional layer 2, to an equal amount of polyvinyl alcohol (PVA-217), and an optically functional layer (layer A) was formed using the coating liquid.

[Production of optical film 109]

An optical film 109 was produced in the same manner as in the production of the optical film 107, except that a coating liquid for forming an optically functional layer 9 was produced by changing the polyvinyl alcohol as the water-based binder resin used to produce the coating liquid for forming an optically functional layer 7 from PVA-124 to PVA-217, and changing the PVA used for coating the vanadium dioxide-containing fine particle surface from PVA-103 to PVA-203, and an optically functional layer (layer A) was formed using the coating liquid.

[Production of optical film 110]

An optical film 110 was produced in the same manner as in the production of the optical film 109, except that a coating liquid for forming an optically functional layer 10 was produced using a vanadium dioxide-containing fine particle dispersion liquid that had been produced by changing the timing for coating the vanadium dioxide-containing fine particle surface with PVA-203, to a time point after particle growth and before the ultrafiltration treatment of the vanadium dioxide-containing fine particle dispersion liquid; adding PVA-203 to the vanadium dioxide-containing fine particle dispersion liquid at a proportion equivalent to 10 parts by mass with respect to 100 parts by mass of the vanadium dioxide-containing fine particles; performing a shelling treatment for 1 hour at 60°C to coat the surface of the vanadium dioxide-containing fine particles; and then performing the ultrafiltration treatment, and an optically functional layer (layer A) was formed using the coating liquid.

[Production of optical film 111]

An optical film 111 was produced in the same manner as in the production of the optical film 109, except that a coating liquid for forming an optically functional layer 11 was produced using a vanadium dioxide-containing fine particle dispersion liquid that was produced by changing the timing for coating the vanadium dioxide-containing fine particle surface with PVA-203, to a time point after particle growth and after the ultrafiltration treatment of the vanadium dioxide-containing fine particle dispersion liquid; and adding PVA-203 to the vanadium dioxide-containing fine particle dispersion liquid at a proportion equivalent to 10 parts by mass with respect to 100 parts by mass of the vanadium dioxide-containing fine particles; performing a shelling treatment for 1 hour at 60°C to coat the surface of the vanadium dioxide-containing fine particles, and an optically functional layer (layer A) was formed using the coating liquid.

[Production of optical film 112]

An optical film 112 was produced in the same manner as in the production of the optical film 109, except that a coating liquid for forming an optically functional layer 12 was produced using a vanadium dioxide-containing fine particle dispersion liquid that had been produced by changing the coating resin for the vanadium dioxide-containing fine particle surface from PVA-203 to PVA-217, which was of the same kind as the water-based binder resin used for form the optically functional layer, and an optically functional layer (layer A) was formed using the coating liquid.

[Production of optical film 113]

An optical film 113 was produced in the same manner as in the production of the optical film 110, except that a coating liquid for forming an optically functional layer 13 was produced using a vanadium dioxide-containing fine particle dispersion liquid that had been produced by changing the coating resin for the vanadium dioxide-containing fine particle surface from PVA-203 to PVA-217, which was of the same kind as the water-based binder resin used for form the optically functional layer, and an optically functional layer (layer A) was formed using the coating liquid.

[Production of optical film 114]

An optical film 114 was produced in the same manner as in the production of the optical film 111, except that a coating liquid for forming an optically functional layer 14 was produced using a vanadium dioxide-containing fine particle dispersion liquid that had been produced by changing the coating resin for the vanadium dioxide-containing fine particle surface from PVA-203 to PVA-217, which was of the same kind as the water-based binder resin used for form the optically functional layer, and an optically functional layer (layer A) was formed using the coating liquid.

[Production of optical film 115]

An optical film 115 was produced in the same manner as in the production of the optical film 102, except that an optically functional layer (layer A) was formed using a coating liquid for forming an optically functional layer 15, which had been produced using, instead of the polyvinyl alcohol (PVA-124) as the water-based binder resin used to produce the coating liquid for forming an optically functional layer 2, an equal amount of hydroxypropylmethyl cellulose (METOLOSE 60SH-50, methoxy group = 28% to 30%, hydroxypropoxy group = 7.0% to 12%, manufactured by Shin-Etsu Chemical Co., Ltd.) as a cellulose resin.

[Production of optical film 116]

An optical film 116 was produced in the same manner as in the production of the optical film 106, except that an optically functional layer (layer A) was formed using a coating liquid for forming an optically functional layer 16, which had been produced using, instead of the polyvinyl alcohol (PVA-124) as the water-based binder resin used to produce the coating liquid for forming an optically functional layer 3, an equal amount of hydroxypropylmethyl cellulose (METOLOSE 60SH-50, methoxy group = 28% to 30%, hydroxypropoxy group = 7.0% to 12%, manufactured by Shin-Etsu Chemical Co., Ltd.) as a cellulose resin.

[Production of optical film 117]

An optical film 117 having the configuration described in Fig. 7, in which a near-infrared light shielding layer 1 and an optically functional layer 9 were laminated on a transparent substrate, was produced by forming an optically functional layer 9 (layer A of optical film 109) as in the production of the optical film 109, by forming a near-infrared light shielding layer 1 (polymer layer laminate) as described below, which was intended to function as layer B and also as a transparent substrate; subsequently applying the coating liquid for forming an optically functional layer 9 produced as described above, by wet coating using an extrusion coater under the conditions that the layer thickness after drying would be 1. 5 $\mu$m; and then drying the coating liquid by blowing hot air at 110°C for 2 minutes.

(Formation of near-infrared light shielding layer 1 (polymer layer laminate ML2 and layer B))

A polymer layer laminate ML2 having a thickness of 50 $\mu$m and having the configuration described in Fig. 7 was produced according to the method described in Example 3 of US 6049419 B, such that the total number of layers formed by alternately laminating polyethylene naphthalate (PEN) and polymethacrylate (PMMA) was 112 layers. This polymer layer laminate ML2 is referred to as near-infrared light shielding layer 1.

[Production of optical film 118]

An optical film 118 having a configuration in which a near-infrared light shielding layer 2 and an optically functional layer 9 were laminated on a transparent substrate, was produced by forming an optically functional layer 9 (layer A of optical film 109) as in the production of the optical film 109, by forming a near-infrared light shielding layer 2 (undercoating layer/silver near-infrared light reflective layer/hard coat layer) described below as layer B on the above-mentioned transparent substrate; subsequently applying the coating liquid for forming an optically functional layer 9 produced as described above, by wet coating using an extrusion coater under the conditions that the layer thickness after drying would be 1.5 $\mu$m; and then drying the coating liquid by blowing hot air at 110°C for 2 minutes.

(Formation of near-infrared light shielding layer 2 (undercoating layer/silver near-infrared light reflective layer/hard coat layer))

An undercoating layer coating liquid 1 was produced by the method described below and was filtered through a polypropylene filter having a pore size of 0.4 μm, and then this undercoating layer coating liquid 1 was applied on the above-mentioned transparent substrate (thickness 50 μm, polyethylene terephthalate film, A4300 manufactured by Toyobo Co., Ltd., double-sided easily adhesive layer) using a microgravure coater. After the coating liquid was dried at 90°C, the film was cured using an ultraviolet lamp at an illuminance at the irradiation part of 100 mW/cm$^2$ and an exposure dose of 100 mJ/cm$^2$, and thus an undercoating layer having a thickness of 1 μm was formed.

Next, a silver thin film layer (silver near-infrared light reflective layer) having a thickness of 15 nm was formed on the undercoating layer thus formed, by a vacuum vapor deposition method using silver containing 2% by mass of gold as a sputtering target material.

Next, an acrylic resin (OPSTAR Z7535, manufactured by JSR Corp.) was applied on the silver thin film layer using a microgravure coater, and the coating layer was dried at 90°C and then cured using an ultraviolet lamp at an illuminance at the irradiation part of 100 mW/cm$^2$ and an exposure dose of 100 mJ/cm$^2$ to form a hard coat layer having a thickness of 0.8 μm. Thus, a near-infrared light shielding layer 2 (undercoating layer/silver near-infrared light reflective layer/hard coat layer) was formed as layer B.

<Production of undercoating layer coating liquid 1>

The various constituent materials described below were sequentially added, stirred and mixed, and thereby an undercoating layer coating liquid 1 was produced.

| | |
|---|---|
| Acrylic monomer: KAYARAD DPHA (dipentaerythritol hexaacrylate, manufactured by Nippon Kayaku Co., Ltd.) | 200 parts by mass |
| IRGACURE 184 (manufactured by BASF Japan, Ltd.) | 20 parts by mass |
| Propylene glycol monomethyl ether | 110 parts by mass |
| Ethyl acetate | 110 parts by mass |

[Production of optical film 119]

An optical film 119 having the configuration described in Fig. 3, in which a near-infrared light shielding layer 3 and an optically functional layer 9 were laminated on a transparent substrate, was produced by forming the near-infrared light shielding layer 3 (reflective layer laminate) described below as layer B on the above-mentioned transparent substrate as in the production of the optical film 109; subsequently applying the coating liquid for forming an optically functional layer 9 produced as described above, by wet coating using an extrusion coater under the conditions that the layer thickness after drying would be 1.5 μm; subsequently drying the coating liquid by blowing hot air at 110°C for 2 minutes; and then forming the optically functional layer 9 in sequence.

(Formation of near-infrared light shielding layer 3 (reflective layer laminate))

<Production of coating liquid for forming a reflective layer>

<1> Production of coating liquid for low refractive index layer L1

680 parts of a 10 mass% aqueous solution of colloidal silica (silicon dioxide, manufactured by Nissan Chemical Industries, Ltd., SNOWTEX (registered trademark) OXS) as the second metal oxide particles, 30 parts of a 4.0 mass% aqueous solution of polyvinyl alcohol (manufactured by Kuraray Co., Ltd., PVA-103; degree of polymerization 300, degree of saponification 98.5 mol%), and 150 parts of a 3.0 mass% aqueous solution of boric acid were mixed and dispersed. Pure water was added to the dispersion, and thus 1,000 parts in total of a colloidal silica dispersion liquid L1 was produced.

Subsequently, the colloidal silica dispersion liquid L1 thus obtained was heated to 45°C, and in the middle of heating, 760 parts of a 4.0 mass% aqueous solution of polyvinyl alcohol (manufactured by Japan Vam & Poval Co., Ltd., JP-45; degree of polymerization 4, 500, degree of saponification 86.5 to 89.5 mol%) as the second water-soluble binder resin was added in order while being stirred. Subsequently, 40 parts of a 1 mass% aqueous solution of a betaine-based surfactant (manufactured by Kawaken Fine Chemicals Co., Ltd., SOFTAZOLINE (registered trademark) LSB-R) was added thereto, and a coating liquid for a low refractive index layer L1 was produced.

<2> Production of coating liquid for low refractive index layer L2

A coating liquid for a low refractive index layer L2 to be used to form the outermost layer of a reflective layer laminate was produced in the same manner as in the production of the coating liquid for a low refractive index layer L1, except that the amount of the solid content of silicon dioxide (colloidal silica) as the second metal oxide particles was changed to 50% by mass.

<3> Production of coating liquid for high refractive index layer H1

<3.1> Production of core-shell particles

<3.2> Production of rutile type titanium oxide constituting core part

An aqueous suspension of titanium oxide was produced such that titanium oxide hydrate was suspended in water, and the concentration in terms of $TiO_2$ would be 100 g/L. 30 L of an aqueous solution of sodium hydroxide (concentration 10 mol/L) was added with stirring to 10 L (liters) of the suspension, and then the mixture was heated to 90°C and aged for 5 hours. Subsequently, the resultant was neutralized using hydrochloric acid, and the product was filtered and then washed using water.

Meanwhile, in regard to the reaction (treatment) described above, the raw material titanium oxide hydrate was obtained by subjecting an aqueous solution of titanium sulfate to a thermal hydrolysis treatment according to a known technique.

The base-treated titanium compound was suspended in pure water such that the concentration in terms of $TiO_2$ would be 20 g/L. Citric acid was added with stirring to the suspension at a proportion of 0.4 mol% with respect to the amount of $TiO_2$. Subsequently, the mixture was heated, and when the temperature of the mixed sol solution reached 95°C, concentrated hydrochloric acid was added thereto so as to obtain a hydrochloric acid concentration of 30 g/L. The mixture was stirred for 3 hours while the liquid temperature was maintained at 95°C, and thus a titanium oxide sol solution was produced.

The pH and zeta potential of the titanium oxide sol solution obtained as described above were measured, and the pH at 25°C was 1.4, while the zeta potential was +40 mV. Furthermore, a particle size analysis was performed using ZETASIZER NANO manufactured by Malvern Instruments, Ltd., and the monodispersity was 16%.

Furthermore, the titanium oxide sol solution was dried at 105°C for 3 hours, and powdered fine particles of titanium oxide were obtained. The powdered fine particles were analyzed by X-ray diffraction using JDX-3530 type manufactured by JEOL DATUM, Ltd., and it was confirmed that the fine particles were rutile type titanium oxide fine particles. The volume average particle size of the fine particles was 10 nm.

A 20.0 mass% water-based dispersion liquid of titanium oxide sol containing the rutile type titanium oxide fine particles having a volume average particle size of 10 nm thus obtained was added to 4 kg of pure water, and thus a sol solution that would serve as core particles was obtained.

<3.3> Production of core-shell particles by shell coating

0.5 kg of a 10.0 mass% water-based dispersion liquid of titanium oxide sol was added to 2 kg of pure water, and the mixture was heated to 90°C. Subsequently, 1.3 kg of an aqueous solution of silicic acid that had been produced to have a concentration in terms of $SiO_2$ of 2.0% by mass, was slowly added to the mixture, and the mixture was subjected to a heating treatment in an autoclave at 175°C for 18 hours. The resultant was further concentrated, and thus a sol solution (solid content concentration: 20% by mass) of core-shell particles (average particle size: 10 nm) was obtained, in which the core particles were formed from titanium oxide having a rutile type structure and the coating layer was formed from $SiO_2$.

<3.4> Production of coating liquid for high refractive index layer

28.9 parts of the sol solution obtained as described above, containing core-shell particles as the first metal oxide particles at a solid content concentration of 20.0% by mass, 10.5 parts of a 1. 92 mass% aqueous solution of citric acid, 2.0 parts of a 10 mass% aqueous solution of polyvinyl alcohol (manufactured by Kuraray Co., Ltd., PVA-103; degree of polymerization 300, degree of saponification 98.5 mol%), and 9.0 parts of a 3 mass% aqueous solution of boric acid were mixed, and thus a core-shell particle dispersion liquid H1 was produced.

Subsequently, while the core-shell dispersion liquid H1 was stirred, 16.3 parts of pure water and 33.5 parts of a 5.0 mass% aqueous solution of polyvinyl alcohol (manufactured by Kuraray Co., Ltd., PVA-124; degree of polymerization 2,400, degree of saponification 98 to 99 mol%) as the first water-soluble binder were added to the dispersion liquid. Furthermore, 0.5 parts of a 1 mass% aqueous solution of a betaine-based surfactant (manufactured by Kawaken Fine Chemicals Co., Ltd., SOFTAZOLINE (registered trademark) LSB-R) was added thereto, and 1,000 parts in total of a coating liquid for a high refractive index layer H1 was produced using pure water.

<Formation of reflective layer laminate>

A reflective layer laminate ML1 having the configuration described in Fig. 3 was produced according to the method described below.

A reflective layer laminate (ML1) was formed by applying the coating liquid for a low refractive index layer L1, the coating liquid for a low refractive index layer L2 and the coating liquid for a high refractive index layer H1 produced as described above, on one surface side of a polyethylene terephthalate film (manufactured by Toyobo Co., Ltd., COSMOSHINE A4300, double-sided easy adhesion treated, abbreviation: PET) having a thickness of 50 $\mu$m as the transparent substrate (2), which had been heated to 45°C, using a slide hopper coating apparatus capable of multilayer application, while the various coating liquids were kept warm at 45°C, such that the respective film thicknesses of the high refractive index layer H1 and the low refractive index layers L1 and L2 after being dried would be 147 nm.

Specifically, simultaneous multilayer application of 17 layers was carried out in a configuration in which one surface of the transparent substrate (2) became a low refractive index layer L1 ($T_1$), a high refractive index layer H1 ($T_2$) was laminated thereon, eight layers each of the refractive index layers were alternately laminated into 16 layers in total in such a configuration, and a low refractive index layer L2 ($T_n$) having a silicon dioxide percentage content of 50% by mass was formed on the 16th layer as a high refractive index layer H1.

Immediately after the application, the laminate was set by blowing cold air at 5°C. At this time, the time taken until the surface became so hard that even if the surface was touched with a finger, the finger did not stick to the surface (setting time), was 5 minutes.

After completion of setting, the laminate was dried by blowing hot air at 80°C, and thus a reflective layer laminate (ML1) having a total thickness of 2.5 $\mu$m, which was composed of 17 layers on one surface of PET film (2), was formed.

Meanwhile, the symbols indicated in parentheses after the various constituent elements represent the symbols described in Fig. 2.

[Production of optical film 120]

An optical film 120 in which a near-infrared light shielding layer 4 and an optically functional layer 9 were laminated on a transparent substrate, was produced by forming the near-infrared light shielding layer 4 (ITO thin film) described below on the transparent substrate used for the production of the optical film 119; subsequently applying the coating liquid for forming an optically functional layer 9 produced as described above, by wet coating using an extrusion coater under the conditions that the layer thickness after drying would be 1.5 $\mu$m; subsequently drying the coating liquid by blowing hot air at 110°C for 2 minutes; and then forming the optically functional layer 9 in order.

(Formation of near-infrared light shielding layer 4 (ITO thin film))

A near-infrared light shielding layer 4 (ITO thin film) was formed as the layer B, by applying the coating liquid for a near-infrared light shielding layer 4 described below, on the transparent substrate using a wire bar such that the (average) film thickness obtained after drying would be 4 $\mu$m; subsequently curing the coating liquid in an air atmosphere using a UV curing apparatus manufactured by Eye Graphics, Inc. (using a high pressure mercury lamp), under the curing conditions of 400 mJ/cm$^2$; and then drying the coating liquid under the drying conditions: 80°C for 3 minutes.

<Production of coating liquid for near-infrared light shielding layer 4>

To 100 parts of V-7600B (UV-curable hard coat material) manufactured by Nippon Synthetic Chemical Industry Co., Ltd., 5 parts of IRGACURE 184 (manufactured by BASF Japan, Ltd.) as a photopolymerization initiator and 100 parts of an ITO powder (ultrafine particles of ITO manufactured by Sumitomo Metal Mining Co., Ltd.) were added, and the mixture was diluted with methyl ethyl ketone as a solvent. Thus, a coating liquid for a near-infrared light shielding layer 4 having a solid content of 30% by mass was produced.

[Production of optical film 121]

An optical film 121 was produced in the same manner as in the production of the optical film 119, except that the coating liquid for forming an optically functional layer 9 (surface coating at the time of forming particles) used to form an optically functional layer, was changed to the coating liquid for forming an optically functional layer 10 (surface coating before ultrafiltration treatment) used to form the optically functional layer of the optical film 110.

[Production of optical film 122]

An optical film 122 was produced in the same manner as in the production of the optical film 119, except that the coating liquid for forming an optically functional layer 9 (surface coating at the time of forming particles) used to form an optically functional layer, was changed to the coating liquid for forming an optically functional layer 11 (surface coating after ultrafiltration treatment) used to form the optically functional layer of the optical film 111.

[Production of optical film 123]

An optical film 123 was produced in the same manner as in the production of the optical film 119, except that the coating liquid for forming an optically functional layer 9 (surface coating at the time of forming particles) used to form an optically functional layer, was changed to the coating liquid for forming an optically functional layer 15 used to form the optically functional layer of the optical film 115.

[Production of optical film 124]

An optical film 124 was produced in the same manner as in the production of the optical film 119, except that the coating liquid for forming an optically functional layer 9 (surface coating at the time of forming particles) used to form an optically functional layer, was changed to the coating liquid for forming an optically functional layer 16 used to form the optically functional layer of the optical film 116.

[Production of optical films 125 to 127]

Optical films 125 to 127 were produced in the same manner as in the production of the optical films 119, 121 and 122, except that the near-infrared light shielding layer and the optically functional layer were formed on a transparent substrate by a simultaneous multilayer application method.

[Production of optical film 128]

An optical film 128 was produced in the same manner as in the formation of the optically functional layer of the optical film 101, except that the optically functional layer (layer A) was formed using a coating liquid for forming an optically functional layer 17, which had been produced by changing the water-based binder PVA-124 used for the production of the coating liquid for forming an optically functional layer 1, to non-water-based VYLON 200 (ester-based resin, manufactured by Toyobo Co., Ltd.), and changing the solvent to methyl ethyl ketone.

[Production of optical film 129]

A polymer layer laminate ML having a thickness of 100 $\mu$m was produced according to the method described in Example 3 of US 6049419 B, such that the total number of layers formed by alternately laminating polyethylene naphthalate (PEN) and polymethacrylate (PMMA) was 224 layers. This was designated as optical film 129.

[Table 1]

| Optical film No. | Transparent substrate | Coating liquid No. | Presence of VO₂ | Drying treatment upon particle production | Coating resin | Timing of coating | Impurities removal treatment | Type | Resin Water-based / non-water-based | *3 | Coating liquid solvent | Near-infrared light shielding layer No. (layer B) | *4 |
|---|---|---|---|---|---|---|---|---|---|---|---|---|---|
| 101 | PET | 1 | Present | Yes | - | - | Filtration and washing | PVA-124 | Water-based | ○ | Water | - | - |
| 102 | PET | 2 | Present | No | - | - | None | PVA-124 | Water-based | ○ | Water | - | - |
| 103 | PET | 3 | Present | No | - | - | None | PVP | Water-based | × | Water | - | - |
| 104 | PET | 4 | Present | No | - | - | None | *1 | Water-based | × | *2 | - | - |
| 105 | PET | 5 | Present | No | - | - | None | PHEA | Water-based | ○ | Water | - | - |
| 106 | PET | 6 | Present | No | - | - | Ultrafiltration | PVA-124 | Water-based | ○ | Water | - | - |
| 107 | PET | 7 | Present | No | PVA-103 | On particle growth | Ultrafiltration | PVA-124 | Water-based | ○ | Water | - | - |
| 108 | PET | 8 | Present | No | - | - | None | PVA-217 | Water-based | ○ | Water | - | - |
| 109 | PET | 9 | Present | No | PVA-203 | On particle growth | Ultrafiltration | PVA-217 | Water-based | ○ | Water | - | - |
| 110 | PET | 10 | Present | No | PVA-203 | Before ultrafiltration | Ultrafiltration | PVA-217 | Water-based | ○ | Water | - | - |
| 111 | PET | 11 | Present | No | PVA-203 | After ultrafiltration | Ultrafiltration | PVA-217 | Water-based | ○ | Water | - | - |
| 112 | PET | 12 | Present | No | PVA-217 | On particle growth | Ultrafiltration | PVA-217 | Water-based | ○ | Water | - | - |
| 113 | PET | 13 | Present | No | PVA-217 | Before ultrafiltration | Ultrafiltration | PVA-217 | Water-based | ○ | Water | - | - |
| 114 | PET | 14 | Present | No | PVA-217 | After ultrafiltration | Ultrafiltration | PVA-217 | Water-based | ○ | Water | - | - |

EP 3 176 614 A1

39

| Optical film No. | Transparent substrate | Optically functional layer (layer A) | | | | | | | | | | Near-infrared light shielding layer No. (layer B) | *4 |
| | | Coating liquid No. | Vanadium dioxide-containing fine particle dispersion liquid | | | | | Water-based binder resin | | | Coating liquid solvent | | |
| | | | Presence of $VO_2$ | Drying treatment upon particle production | Surface coating of $VO_2$-containing fine particles | | Impurities removal treatment | Type | Resin Water-based / non-water-based | *3 | | | |
| | | | | | Coating resin | Timing of coating | | | | | | | |
| 115 | PET | 15 | Present | No | - | - | None | 60SH-50 | Water-based | ○ | Water | - | - |

*1: HEA / AAm = 45/55 (molar ratio)
*2: $H_2O$ / IPA = 7/3 (mass ratio)
*3: The proportion of hydroxyl group-containing repeating units is 50 mol% or more → ○ The proportion of hydroxyl group-containing repeating units is less than 50 mol% → ×
*4 Application method for layer A and layer B (sequential application or simultaneous application)

[Table 2]

| Optical film No. | Transparent substrate | Optically functional layer (layer A) | | | | | | | | | | | Near-infrared light shielding layer No. (layer B) | *4 |
|---|---|---|---|---|---|---|---|---|---|---|---|---|---|---|
| | | Coating liquid No. | Vanadium dioxide-containing fine particle dispersion liquid | | | | | Water-based binder resin | | | Coating liquid solvent | | | |
| | | | Presence of VO$_2$ | Drying treatment upon particle production | Surface coating of VO$_2$-containing fine particles | | Impurities removal treatment | Type | Resin Water-based / non-water-based | *3 | | | | |
| | | | | | Coating resin | Timing of coating | | | | | | | | |
| 116 | PET | 16 | Present | No | - | - | Ultrafiltration | 60SH-50 | Water-based | ○ | Water | - | - |
| 117 | PET | 9 | Present | No | PVA-203 | On particle growth | Ultrafiltration | PVA-217 | Water-based | ○ | Water | 1 | Sequential application |
| 118 | PET | 9 | Present | No | PVA-203 | On particle growth | Ultrafiltration | PVA-217 | Water-based | ○ | Water | 2 | Sequential application |
| 119 | PET | 9 | Present | No | PVA-203 | On particle growth | Ultrafiltration | PVA-217 | Water-based | ○ | Water | 3 | Sequential application |
| 120 | PET | 9 | Present | No | PVA-203 | On particle growth | Ultrafiltration | PVA-217 | Water-based | ○ | Water | 4 | Sequential application |
| 121 | PET | 10 | Present | No | PVA-203 | Before ultrafiltration | Ultrafiltration | PVA-217 | Water-based | ○ | Water | 3 | Sequential application |
| 122 | PET | 11 | Present | No | PVA-203 | After ultrafiltration | Ultrafiltration | PVA-217 | Water-based | ○ | Water | 3 | Sequential application |
| 123 | PET | 15 | Present | No | - | - | None | 60SH-50 | Water-based | ○ | Water | 3 | Sequential application |
| 124 | PET | 16 | Present | No | - | - | Ultrafiltration | 60SH-50 | Water-based | ○ | Water | 3 | Sequential application |
| 125 | PET | 9 | Present | No | PVA-203 | On particle growth | Ultrafiltration | PVA-217 | Water-based | ○ | Water | 3 | Simultaneous application |
| 126 | PET | 10 | Present | No | PVA-203 | Before ultrafiltration | Ultrafiltration | PVA-217 | Water-based | ○ | Water | 3 | Simultaneous application |
| 127 | PET | 11 | Present | No | PVA-203 | After ultrafiltration | Ultrafiltration | PVA-217 | Water-based | ○ | Water | 3 | Simultaneous application |

EP 3 176 614 A1

41

(continued)

| Optical film No. | Transparent substrate | Coating liquid No. | Optically functional layer (layer A) | | | | | | | | | | Near-infrared light shielding layer No. (layer B) | *4 |
| | | | Vanadium dioxide-containing fine particle dispersion liquid | | | | | Water-based binder resin | | | Coating liquid solvent | | |
| | | | Presence of VO$_2$ | Drying treatment upon particle production | Surface coating of VO$_2$-containing fine particles | | Impurities removal treatment | Type | Resin Water-based / non-water-based | *3 | | | |
| | | | | | Coating resin | Timing of coating | | | | | | | |
| 128 | PET | 17 | Present | Yes | - | - | Filtration and washing | VYLON 200 | Non-water-based | × | MEK | - | - |
| 129 | - | - | - | - | - | - | - | - | - | - | - | Reflective layer 5 | - |

*3: The proportion of hydroxyl group-containing repeating units is 50 mol% or more → ○ The proportion of hydroxyl group-containing repeating units is less than 50 mol% → ×
*4: Application method for layer A and layer B (sequential application or simultaneous application)

Meanwhile, the details about the various additives described in abbreviations in Table 1 and Table 2 are as follows.

(Transparent substrate)

PET: Polyethylene terephthalate

(Binder resin)

PVA-103: Polyvinyl alcohol, KURARAY POVAL PVA-103, manufactured by Kuraray Co., Ltd.
PVA-124: Polyvinyl alcohol, KURARAY POVAL PVA-124, manufactured by Kuraray Co., Ltd.
PVA-203: Polyvinyl alcohol, KURARAY POVAL PVA-203, manufactured by Kuraray Co., Ltd.
PVA-217: Polyvinyl alcohol, KURARAY POVAL PVA-217, manufactured by Kuraray Co., Ltd.
PVP: Polyvinylpyrrolidone, K-85, manufactured by Nippon Shokubai Co., Ltd.
HEA: Hydroxyethyl acrylate
AAm: Acrylamide
60SH-50: Hydroxypropylmethyl cellulose (cellulose-based resin), manufactured by Shin-Etsu Chemical Co., Ltd.
VYLON 200: Ester-based resin, manufactured by Toyobo Co. , Ltd.

(Solvent)

MEK: Methyl ethyl ketone
IPA: Isopropyl alcohol

<<Production of optical film-bonded glass>>

[Production of optical film-bonded glasses 101 to 129>>

Optical film-bonded glasses 101 to 129 were each produced by bonding each of the optical films 101 to 129 produced as described above, to a glass plate (manufactured by Matsunami Glass Industry, Ltd., "SLIDE GLASS HAKUENMA") having a thickness of 1.3 mm and a size of 15 cm × 20 cm, using a transparent pressure-sensitive adhesive sheet (manufactured by Nitto Denko Corp., LUCIACS CS9621T).

[Production of optical film-bonded glass 130>>

Only the above-mentioned glass plate having a thickness of 1.3 mm and a size of 15 cm × 20 cm was used, without applying an optical film, and this was designated as optical film-bonded glass 130.

<<Evaluation of optical films and optical film-bonded glasses>>

[Evaluation of storability: evaluation of optical film]

Each of the optical films thus obtained was cut into five sheets each having a size of 10 cm on each side, and a shelf-life acceleration test as described below was performed as an evaluation of storability. A sample was produced after the shelf-life acceleration test. Subsequently, evaluation of storability was performed according to the following evaluation criteria.

(Shelf-life acceleration test)

Three acceleration testers were provided, and the testers were adjusted to 85°C (no humidification), -20°C, and 60°C at a relative humidity of 80%, respectively. Each of the optical films was stored sequentially under the conditions of (85°C: 1 hour) → (-20°C: 1 hour) → (60°C/relative humidity 80%: 1 hour), and this was repeated three times. Meanwhile, the time taken for transfer between the respective acceleration testers was set to 1 minute or less. Subsequently, the optical film was irradiated with light at an irradiance of 1 kW/m$^2$ for 15 hours using a metal halide lamp type weather resistance tester (M6T manufactured by Suga Instruments, Inc.). This was taken as one cycle, and a shelf-life acceleration test of 3 cycles in total was carried out.

(Evaluation criteria)

○: In all of five sheets of optical films, the occurrence of cracks having a size of 0.5 mm or more and film peeling is not observed.

○Δ: In five sheets of optical films, the total number of occurrences of cracks having a size of 0.5 mm or more and less than 3 mm, or film peeling is from 1 to 2.

Δ: In five sheets of optical films, the total number of occurrences of cracks having a size of 0.5 mm or more and less than 3 mm, or film peeling is from 3 to 5.

Δ✕: In five sheets of optical films, the total number of occurrences of cracks having a size of 0.5 mm or more and less than 3 mm, or film peeling is from 6 to 10.

✕: In five sheets of optical films, the total number of occurrences of cracks having a size of 0.5 mm or more and less than 3 mm, or film peeling is from 11 or more, or the total number of occurrences of cracks having a size of 3 mm or more or film peeling is 1 or more.

[Evaluation of heat shielding properties]

Heat shielding properties under the assumption of summer season, and heat shielding properties under the assumption of winter season were evaluated as described below, using the optical film-bonded glasses 101 to 130 thus produced. Thus, thermochromic properties of the optical films were evaluated.

(Evaluation of heat shielding properties under assumption of summer season)

<Environment for measurement>

• Environment for measurement: An optical film-bonded glass was disposed on a window frame of an environment testing chamber at a room temperature of 28°C such that the optical film was disposed on the inner side. An environmental chamber simulating a "Cool Biz (lightly air-conditioned)" office room in Japan was used.
• A halogen lamp of 150 W was lighted at a position of 50 cm away from the outer side of the position where the optical film-bonded glass was disposed in the environment test chamber, under the assumption of sunlight in the summer season.
• Furthermore, under the assumption that the optical film-bonded glass would be heated as a result of accumulation of irradiation with solar light, the bonded glass was heated to 70°C with a thermocouple.

<Evaluation 1>

A thermometer was installed at a position 1 m away from the optical film-bonded glass in the environment test chamber, and the temperature after a lapse of 1 hour under the above-described conditions was measured. Thus, an evaluation of heat shielding properties was performed according to the following criteria.

⊙: The temperature after a lapse of 1 hour is below 29°C, and temperature increase caused by external light is hardly recognized.

○: The temperature after a lapse of 1 hour is from 29°C to 32°C.

○Δ: The temperature after a lapse of 1 hour is from 32°C to 34°C.

Δ: The temperature after a lapse of 1 hour is from 34°C to 36°C.

✕ : The temperature after a lapse of 1 hour is 36°C or higher, which is a harsh environment.

(Evaluation of heat shielding properties under assumption of winter season)

<Environment for measurement>

- Environment for measurement: An optical film-bonded glass was disposed on a window frame of an environment testing chamber at a room temperature of 20°C such that the optical film was disposed on the inner side. An environmental chamber simulating a "Warm Biz (lightly heated)" office room in Japan was used.
- A halogen lamp of 100 W was lighted at a position of 50 cm away from the outer side of the position where the optical film-bonded glass was disposed in the environment test chamber, under the assumption of sunlight in the winter season.

<Evaluation 2>

A thermometer was installed at a position 1 m away from the optical film-bonded glass in the environment test chamber, and the temperature after a lapse of 1 hour under the above-described conditions was measured. Thus, an evaluation of heat shielding properties was performed according to the following criteria.
⊙: The temperature after a lapse of 1 hour is 26°C or higher, and heat energy coming from the light outside has appropriately penetrated.
○: The temperature after a lapse of 1 hour is 24°C or higher and below 26°C.
○Δ: The temperature after a lapse of 1 hour is from 22°C to 24°C.
Δ: The temperature after a lapse of 1 hour is from 21°C to 22°C.
✕: A large amount of near-infrared light is unconditionally shielded, and the temperature after a lapse of 1 hour is below 21°C.

[Evaluation of haze]

The haze value (%) was measured for the various optical film-bonded glasses produced as described above, using a haze meter (manufactured by Nippon Denshoku Industries Co., Ltd., NDH2000), and an evaluation of haze was performed according to the following criteria.
⊙: The haze value is less than 2.0%.

○: The haze value is 2.0% or more and less than 3.0%.

○Δ: The haze value is 3.0 or more and less than 5.0%.

Δ: The haze value is 5.0% or more and less than 8.0%.

✕: The haze value is 8.0% or more.

The results thus obtained are presented in Table 3.

[Table 3]

| Laminated glass No. | Optical film No. | VO$_2$-containing fine particle characteristic values | | Various evaluation results | | | | Remarks |
|---|---|---|---|---|---|---|---|---|
| | | Average particle size (nm) | Ratio of primary particles (%) | Storability | Thermal barrier effect | | Haze | |
| | | | | | Summer season conditions | Winter season conditions | | |
| 101 | 101 | 190 | 25 | Δ | ○Δ | ○Δ | Δ | Invented Example |
| 102 | 102 | 75 | 51 | ○Δ | ○Δ | ○Δ | ○ | Invented Example |
| 103 | 103 | 95 | 35 | ○Δ | ○Δ | ○Δ | ○Δ | Invented Example |
| 104 | 104 | 95 | 35 | ○Δ | ○Δ | ○Δ | ○Δ | Invented Example |
| 105 | 105 | 80 | 45 | ○Δ | ○Δ | ○Δ | ○Δ | Invented Example |
| 106 | 106 | 55 | 65 | ○ | ○Δ | ○Δ | ○ | Invented Example |
| 107 | 107 | 30 | 82 | ○ | ○Δ | ○Δ | ⊙ | Invented Example |
| 108 | 108 | 52 | 65 | ○ | ○Δ | ○Δ | ○ | Invented Example |
| 109 | 109 | 28 | 87 | ○ | ○Δ | ○Δ | ⊙ | Invented Example |
| 110 | 110 | 36 | 78 | ○ | ○Δ | ○Δ | ○ | Invented Example |
| 111 | 111 | 38 | 71 | ○ | ○Δ | ○Δ | ○ | Invented Example |
| 112 | 112 | 31 | 82 | ○ | ○Δ | ○Δ | ⊙ | Invented Example |
| 113 | 113 | 38 | 74 | ○ | ○Δ | ○Δ | ○ | Invented Example |
| 114 | 114 | 41 | 70 | ○ | ○Δ | ○Δ | ○ | Invented Example |
| 115 | 115 | 75 | 52 | ○Δ | ○Δ | ○Δ | ○ | Invented Example |
| 116 | 116 | 58 | 65 | ○ | ○Δ | ○Δ | ○ | Invented Example |
| 117 | 117 | 28 | 87 | ○ | ⊙ | ○Δ | ○ | Invented Example |
| 118 | 118 | 28 | 87 | ○ | ○ | Δ | ○ | Invented Example |
| 119 | 119 | 28 | 87 | ○ | ⊙ | ○Δ | ○ | Invented Example |

(continued)

| Laminated glass No. | Optical film No. | VO$_2$-containing fine particle characteristic values | | Various evaluation results | | | | Remarks |
|---|---|---|---|---|---|---|---|---|
| | | Average particle size (nm) | Ratio of primary particles (%) | Storability | Thermal barrier effect | | Haze | |
| | | | | | Summer season conditions | Winter season conditions | | |
| 120 | 120 | 28 | 87 | ○ | ○ | Δ | ○ | Invented Example |
| 121 | 121 | 36 | 78 | ○ | ⊙ | ○Δ | ○ | Invented Example |
| 122 | 122 | 38 | 71 | ○ | ⊙ | ○Δ | ○ | Invented Example |
| 123 | 123 | 75 | 52 | ○Δ | ○ | ○Δ | ○ | Invented Example |
| 124 | 124 | 58 | 65 | ○ | ○ | ○Δ | ○ | Invented Example |
| 125 | 125 | 28 | 87 | ○ | ⊙ | ○Δ | ⊙ | Invented Example |
| 126 | 126 | 36 | 78 | ○ | ⊙ | ○Δ | ⊙ | Invented Example |
| 127 | 127 | 38 | 71 | ○ | ⊙ | ○Δ | ⊙ | Invented Example |
| 128 | 128 | 580 | 10 | × | Δ | ○Δ | × | Comparative Example |
| 129 | 129 | - | - | ○ | ⊙ | × | ○ | Comparative Example |
| 130 | - | - | - | ○ | × | ○ | ⊙ | Comparative Example |

As is obvious from the results described in Table 3, it is understood that the optical films of the present invention have thermochromic properties capable of regulating the near-infrared shield factor depending on the temperature environment, have low haze values, and have excellent cracking resistance and satisfactory adhesiveness even if put to use for an extended period of time.

Industrial Applicability

The optical film of the present invention is an optical film having thermochromic properties, having a low haze value, and having excellent characteristics of cracking resistance and adhesiveness, and the optical film can constitute a laminated glass by being sandwiched between a pair of glass-constituting members. This laminated glass can be suitably utilized as a glass window member for use in automobiles railway vehicles, aircrafts, ships, and constructions.

Reference Signs List

1 OPTICAL FILM
2 TRANSPARENT SUBSTRATE
3, 3A, 3B OPTICALLY FUNCTIONAL LAYER
4 NEAR-INFRARED LIGHT SHIELDING LAYER

B BINDER RESIN
L LIGHT RAY INCIDENT SIDE
ML1, ML1a, ML1b REFLECTIVE LAYER LAMINATE
ML2 POLYMER LAYER LAMINATE
$PEN_1$ to $PEN_n$ POLYETHYLENE NAPHTHALATE FILM
$PMMA_1$ to $PMMA_n$ POLYMETHYL METHACRYLATE FILM
$T_1$ to $T_n$, $Ta_1$ to $Ta_n$, $Tb_1$ to $Tb_n$ INFRARED
REFLECTIVE LAYER
$VO_S$ PRIMARY PARTICLES OF VANADIUM DIOXIDE-CONTAINING FINE PARTICLES
$VO_M$ SECONDARY PARTICLES OF VANADIUM DIOXIDE-CONTAINING FINE PARTICLES

**Claims**

1. An optical film comprising, on a transparent substrate, an optically functional layer containing at least vanadium dioxide-containing fine particles and a binder resin,
   wherein the number average particle size of all the particles including primary particles and secondary particles of the vanadium dioxide-containing fine particles in the optically functional layer is less than 200 nm.

2. The optical film according to claim 1, wherein the vanadium dioxide-containing fine particles are vanadium dioxide-containing fine particles produced by an aqueous synthesis method, and the binder resin is a water-based binder resin.

3. The optical film according to claim 2, wherein the water-based binder resin is a polymer containing a repeating unit having a hydroxyl group at a proportion of 50 mol% or more.

4. The optical film according to claim 2 or 3, wherein the water-based binder resin is a polyvinyl alcohol-based resin or a cellulose-based resin.

5. The optical film according to any one of claims 2 to 4,
   wherein the surface of the vanadium dioxide-containing fine particles produced by an aqueous synthesis method is coated, before being mixed with the water-based binder resin, with a resin that is the same as the water-based binder resin, or a resin of the same kind as the water-based binder resin.

6. The optical film according to any one of claims 1 to 5, further comprising, in addition to the optically functional layer, a near-infrared light shielding layer having a function of shielding at least a portion of light having a wavelength in the range of 700 to 1,000 nm.

7. The optical film according to claim 6, wherein the near-infrared light shielding layer is a reflective layer laminate capable of selectively reflecting light having a particular wavelength, the near-infrared light shielding layer being obtained by alternately laminating a high refractive index reflective layer containing a first water-soluble binder resin and first metal oxide particles, and a low refractive index reflective layer containing a second water-soluble binder resin and second metal oxide particles.

8. The optical film according to claim 7, wherein the water-based binder resin constituting the optically functional layer, and the first water-soluble binder resin or the second water-soluble binder resin constituting the reflective layer laminate are binder resins of the same kind.

9. The optical film according to any one of claims 1 to 8,
   wherein the ratio of the particle number of primary particles of the vanadium dioxide-containing fine particles in the optically functional layer is 30% by number or more of the total number of particles.

10. A method for manufacturing an optical film, the method comprising forming an optically functional layer containing at least vanadium dioxide-containing fine particles and a binder resin on a transparent substrate,
    wherein the number average particle size of all the particles including primary particles and secondary particles of the vanadium dioxide-containing fine particles is regulated to be less than 200 nm.

11. The method for manufacturing an optical film according to claim 10, wherein vanadium dioxide-containing fine particles produced by an aqueous synthesis method are used as the vanadium dioxide-containing fine particles, and the binder resin is a water-based binder resin.

12. The method for manufacturing an optical film according to claim 11, wherein the vanadium dioxide-containing fine particles are prepared as a water-based dispersion liquid containing vanadium dioxide-containing fine particles by the aqueous synthesis method, the water-based dispersion liquid is produced into a water-based coating liquid for forming an optically functional layer, without being in a dried state, by mixing the water-based dispersion liquid with a water-based binder resin solution obtained by dissolving at least the water-based binder resin in a water-based solvent, the coating liquid for forming an optically functional layer is applied on the transparent substrate by a wet coating method and dried, and thus an optical film is produced.

13. The method for manufacturing an optical film according to claim 12, wherein in regard to the preparation of the water-based coating liquid for forming an optically functional layer, the water-based dispersion liquid containing vanadium dioxide-containing fine particles is subjected to an ultrafiltration treatment before being mixed with the water-based binder resin solution.

14. The method for manufacturing an optical film according to any one of claims 11 to 13, wherein the surface of the vanadium dioxide-containing fine particles is coated with a resin that is the same as the water-based binder resin, or a resin of the same kind as the water-based binder resin.

15. The method for manufacturing an optical film according to any one of claims 10 to 14, wherein a near-infrared light shielding layer having a function of shielding at least a portion of light having a wavelength in the range of 700 to 1,000 nm is formed in addition to the optically functional layer.

16. The method for manufacturing an optical film according to claim 15, wherein the near-infrared light shielding layer forms a reflective layer laminate capable of selectively reflecting light having a particular wavelength, the near-infrared light shielding layer being obtained by alternately laminating a high refractive index reflective layer containing a first water-soluble binder resin and first metal oxide particles, and a low refractive index reflective layer containing a second water-soluble binder resin and second metal oxide particles.

17. The method for manufacturing an optical film according to claim 16, wherein the water-based binder resin included in the optically functional layer, and the first water-soluble binder resin or the second water-soluble binder resin used for forming the near-infrared shielding layer comprise binder resins of the same kind, and an optical film is produced by applying the optically functional layer and the near-infrared light shielding layer by simultaneous multilayer application on the transparent substrate.

## FIG. 1

## FIG. 2A

## FIG. 2B

## FIG. 2C

# FIG. 3

# FIG. 4

## FIG. 5

# FIG. 6

$L$      $1$

3A

$Ta_n$
$Ta_{n-1}$
$Ta_{n-2}$
$Ta_6$
$Ta_5$
$Ta_4$
$Ta_3$
$Ta_2$
$Ta_1$

$ML1a$

$2$

$Tb_1$
$Tb_2$
$Tb_3$
$Tb_4$
$Tb_5$
$Tb_6$
$Tb_{n-2}$
$Tb_{n-1}$
$Tb_n$

$ML1b$

3B

# FIG. 7

L    1

3

PEN$_n$

PMMA$_n$

PEN$_{n-1}$

PMMA$_3$

PEN$_3$

PMMA$_2$

PEN$_2$

PMMA$_1$

PEN$_1$

ML2, 2

## INTERNATIONAL SEARCH REPORT

| International application No. |
|---|
| PCT/JP2015/071303 |

| A. CLASSIFICATION OF SUBJECT MATTER |
|---|
| *G02B5/22*(2006.01)i, *B32B23/08*(2006.01)i, *B32B23/22*(2006.01)i, *B32B27/18*(2006.01)i, *B32B27/30*(2006.01)i, *C09D5/32*(2006.01)i, *C09D7/12*(2006.01)i, *C09D101/00*(2006.01)i, *C09D129/04*(2006.01)i, |
| According to International Patent Classification (IPC) or to both national classification and IPC |

| B. FIELDS SEARCHED |
|---|
| Minimum documentation searched (classification system followed by classification symbols) |
| G02B5/22, B32B23/08, B32B23/22, B32B27/18, B32B27/30, C09D5/32, C09D7/12, C09D101/00, C09D129/04, G02B5/26, G02B5/28 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)
CAplus/REGISTRY(STN)

| C. DOCUMENTS CONSIDERED TO BE RELEVANT |
|---|

| Category* | Citation of document, with indication, where appropriate, of the relevant passages | Relevant to claim No. |
|---|---|---|
| X<br><br>Y | WO 2013/107081 A1 (Shanghai Institute of Ceramics, Chinese Academy of Sciences, FSPG Hi-Tech Co., Ltd.),<br>25 July 2013 (25.07.2013),<br>claims; example 1; paragraphs [0024], [0061] to [0062], [0105]; fig. 2 to 3<br>& JP 2015-513508 A     & US 2015/0132494 A1<br>claims; example 1; paragraphs [0024], [0041] to [0042], [0098]; fig. 2 to 3<br>& CN 103073943 A | 1-6,9-11,<br>14-15<br>7-8,16-17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 October 2015 (19.10.15) | 27 October 2015 (27.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

International application No.

PCT/JP2015/071303

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2012/014655 A1 (Konica Minolta Holdings, Inc.), 02 February 2012 (02.02.2012), claims; examples 1 to 3, 7, 9 & JP 5720685 B        & US 2013/0114131 A1 claims; examples 1 to 3, 7, 9 & EP 2597495 A1        & CN 103003727 A | 7-8,16-17 |
| X | JP 2011-178825 A (National Institute of Advanced Industrial Science and Technology), 15 September 2011 (15.09.2011), claims; paragraphs [0043], [0066], [0085]; examples (Family: none) | 1,6,9-10,15 |
| X | JP 2004-346260 A (Toagosei Co., Ltd.), 09 December 2004 (09.12.2004), claims; paragraphs [0012], [0017]; synthesis examples; examples (Family: none) | 1,6,9-10,15 |
| A | JP 2013-184091 A (Kuraray Co., Ltd., National Institute of Advanced Industrial Science and Technology), 19 September 2013 (19.09.2013), claims; paragraph [0025]; examples (Family: none) | 1-17 |
| A | JP 2013-75806 A (Sekisui Chemical Co., Ltd.), 25 April 2013 (25.04.2013), claims; paragraph [0036]; examples 3 to 5 (Family: none) | 1-17 |
| A | JP 2012-141353 A (Hiraoka & Co., Ltd.), 26 July 2012 (26.07.2012), claims; examples (Family: none) | 1-17 |
| A | JP 2010-31235 A (National Institute of Advanced Industrial Science and Technology), 12 February 2010 (12.02.2010), claims; paragraphs [0049], [0077], [0079]; examples & US 2011/0095242 A1    & WO 2010/001669 A1 & CN 102066261 A | 1-17 |
| P,X | JP 2015-63453 A (Sekisui Chemical Co., Ltd.), 09 April 2015 (09.04.2015), claims; paragraphs [0010], [0023]; examples 1 to 2 (Family: none) | 1-4,6,9-11, 15 |

Form PCT/ISA/210 (continuation of second sheet) (July 2009)

**INTERNATIONAL SEARCH REPORT**

International application No.

PCT/JP2015/071303

Continuation of A. CLASSIFICATION OF SUBJECT MATTER
(International Patent Classification (IPC))

*G02B5/26*(2006.01)i, *G02B5/28*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010222233 A
- WO 2013065679 A
- JP 2011178825 A
- JP 2013184091 A
- US 6049419 B
- JP 2010058984 A
- JP 61010483 A
- JP 1206088 A
- JP 61237681 A
- JP 63307979 A
- JP 7285265 A
- JP 7009758 A
- JP 8025795 A
- WO 2011148931 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A

- JP 61242871 A
- JP 4219266 A
- US 2761419 B
- US 2761791 B
- JP 10158015 A
- JP 2000053421 A
- JP 2000063119 A
- JP 2000204301 A
- JP 4550753 B
- JP 57014091 A
- JP 60219083 A
- JP 60219084 A
- JP 61020792 A
- JP 61188183 A
- JP 63017807 A
- JP 4093284 A
- JP 5278324 A
- JP 6092011 A
- JP 6183134 A
- JP 6297830 A
- JP 7081214 A
- JP 7101142 A
- JP 7179029 A
- JP 7137431 A
- WO 199426530 A
- US 6049419 A

### Non-patent literature cited in the description

- **T.H. JAMES.** The Theory of Photographic Process. Macmillan, 55
- Kagaku Shashin Benran. Maruzen, vol. 1, 72-75
- Shashin Kogaku no Kiso - Ginsho Shashin Hen. Corona, 119-124

- *Research Disclosure,* December 1978, vol. 176 (17643), IX
- Seikagaku Jiten. Tokyo Kagaku Doj in Co., Ltd,
- Shokuhin Kogyo. 1988, vol. 31, 21
- Kagaku Daijiten. Kyoritsu Shuppan Co., Ltd, 1960, 268-270